# EUROPEAN PATENT APPLICATION

(11) **EP 4 387 287 A1**
(43) Date of publication of application: **19.06.2024**
(21) Application number: 22866395.1
(22) Date of filing: 22.08.2022
(51) Int. Cl.: H04W 4/50

(54) **SERVICE PROCESSING METHOD, APPARATUS AND SYSTEM**

(30) Priority: 09.09.2021 CN 202111057926
(71) Applicant: Huawei Technologies Co., Ltd., Shenzhen, Guangdong 518129 (CN)
(72) Inventor: HU, Xiang, Shenzhen, Guangdong 518129 (CN)
(74) Representative: Thun, Clemens
(86) International application number: PCT/CN2022/114033
(87) International publication number: WO 2023/035925

(57) **Abstract**

This application provides a service processing method, apparatus, and system, to resolve a problem of network congestion. The method includes: A session management function network element obtains first information; determines, based on the first information, a transmission bandwidth of a first service to be accessed by a terminal device, where the transmission bandwidth of the first service exceeds a first threshold; determines a target user plane function network element based on the transmission bandwidth of the first service; and sends a first message to the target user plane function network element, where the first message is for requesting the target user plane function network element to provide a service for the terminal device. Based on the method, network congestion can be avoided, and load balancing of a user plane function network element can be implemented.

## Description

### CROSS-REFERENCE TO RELATED APPLICATIONS

This application claims priority to Chinese Patent Application No. 202111057926.0, filed with the China Intellectual Property Administration on September 9, 2021 and entitled "SERVICE PROCESSING METHOD, APPARATUS, AND SYSTEM", which is incorporated herein by reference in its entirety.

### TECHNICAL FIELD

Embodiments of this application relate to the field of communication technologies, and in particular, to a service processing method, apparatus, and system.

### BACKGROUND

A user plane session establishment procedure includes a process of selecting a user plane function network element by a session management function network element. The procedure may further include a process of selecting a processing unit by the user plane function network element, where the processing unit is a processing unit in the user plane function network element. The user plane function network element or the processing unit is usually responsible for user plane data forwarding and other processing.

Currently, there is a case that the session management function network element selects a same user plane function network element for a plurality of terminal devices, or even the user plane function network element selects a same processing unit for a plurality of terminal devices. When a plurality of terminal devices served by the same user plane function network element or the same processing unit access a bandwidth-hungry service, network congestion occurs on the user plane function network element or the processing unit, affecting user experience.

### SUMMARY

Embodiments of this application provide a service processing method, apparatus, and system, to avoid network congestion and improve users' service experience.

According to a first aspect, embodiments of this application provide a service processing method, including: A session management function network element obtains first information; the session management function network element determines, based on the first information, a transmission bandwidth of a first service to be accessed by a terminal device, where the transmission bandwidth of the first service exceeds a first threshold; the session management function network element determines a target user plane function network element based on the transmission bandwidth of the first service; and the session management function network element sends a first message to the target user plane function network element, where the first message is for requesting the target user plane function network element to provide a service for the terminal device.

In embodiments of this application, when selecting a user plane function network element for the terminal device, the session management function network element considers a transmission bandwidth requirement for accessing a high-bandwidth service by the terminal device, to avoid network congestion and implement load balancing at a granularity of the user plane function network element.

The high-bandwidth service may be understood as a service that has a high requirement for a transmission bandwidth. It may be understood as follows: It is assumed that a first bandwidth value is a limit, a transmission bandwidth higher than the first bandwidth value is a transmission bandwidth that has a high requirement for the transmission bandwidth, a service whose transmission bandwidth is higher than the first bandwidth value may be referred to as a high-bandwidth service. An elephant flow service is a high-bandwidth service.

As described above, the first information may be for determining the transmission bandwidth of the first service to be accessed by the terminal device. After obtaining the first information, the session management function network element determines the transmission bandwidth of the service to be accessed by the terminal device. When determining, based on the transmission bandwidth, that the first service is an elephant flow service, the session management function network element selects the user plane function network element based on the transmission bandwidth.

The first information may further indicate the first service to be accessed by the terminal device. For example, the first information may further indicate that the first service is a service whose transmission bandwidth exceeds a first threshold. In an embodiment, the first service may be indicated as an elephant flow service.

For example, after obtaining the first information, the session management function network element first determines, based on the first information, the first service to be accessed by the terminal device, for example, determines that the first service is an elephant flow service. Therefore, the session management function network element determines the transmission bandwidth of the first service based on the first information, and selects the user plane function network element based on the transmission bandwidth.

Functions of the first information in the foregoing content may also be applicable to descriptions of other aspects of this application, and details of other aspects are not described.

In a possible design, the first information includes at least one of the following: a service type of the first service, a service level of the first service, time period-based transmission traffic information of the first service, transmission rate information of the first service, or the transmission bandwidth of the first service.

In a possible design, that the session management function network element determines a target user plane function network element based on the transmission bandwidth of the first service includes: The first information includes running time information of the first service; and the session management function network element determines the target user plane function network element based on the transmission bandwidth of the first service and the running time information of the first service. Using the design can predict a running time period of the high-bandwidth service, and select a target user plane function network element that supports the transmission bandwidth of the first service in the running time period, which is more targeted. In addition, using the design can avoid that high-bandwidth services that run in a same time period are distributed on a same user plane function network element, and thereby ensure smooth running of the high-bandwidth services.

In a possible design, that a session management function network element obtains first information includes: The session management function network element obtains the first information from a network data analytics function network element, where the first information is related to historical service information of the terminal device. In a possible case, the first information may be based on the historical service information of the terminal device. The network data analytics function network element analyzes, by using its data analysis function, the historical service information of the terminal device to determine whether the terminal device has a requirement for accessing the high-bandwidth service, to help select an appropriate user plane function network element and avoid network congestion.

In a possible implementation of the possible design, that the session management function network element obtains the first information from a network data analytics function network element includes: The session management function network element sends a message to the network data analytics function network element, where the message includes identification information of the terminal device and/or identification information for requesting the first information; and the session management function network element receives the first information from the network data analytics function network element.

In a possible design, that a session management function network element obtains first information includes: The session management function network element obtains subscription information of the terminal device from a first network element, where the subscription information includes the first information. Optionally, the first network element includes a policy control function network element or a unified data management network element.

In a possible design, the first message sent by the session management function network element to a target user plane function network element includes second information, and the second information is for determining the transmission bandwidth of the first service.

Optionally, the second information includes at least one of the following: a service type of the first service, a service level of the first service, time period-based transmission traffic information of the first service, transmission rate information of the first service, or the transmission bandwidth of the first service.

According to a second aspect, embodiments of this application provide a service processing method, including: A user plane function network element obtains information, where the user plane function network element is for determining, based on the information, a transmission bandwidth of a first service to be accessed by a terminal device, where the transmission bandwidth of the first service exceeds a first threshold, and the user plane function network element supports the transmission bandwidth of the first service; and the user plane function network element determines, based on the transmission bandwidth of the first service, at least one processing unit for processing the first service.

In embodiments of this application, when selecting a processing unit for the terminal device, the user plane function network element considers a transmission bandwidth requirement for accessing a high-bandwidth service by the terminal device, so that network congestion can be avoided, and load balancing can be implemented at a granularity of a processing unit. In a possible design, the information includes at least one of the following: a service type of the first service, a service level of the first service, time period-based transmission traffic information of the first service, transmission rate information of the first service, or the transmission bandwidth of the first service.

In a possible design, that a user plane function network element obtains information includes: The user plane function network element receives a first message from a session management function network element, where the first message includes the information, and the first message is for requesting the user plane function network element to provide a service for the terminal device. The information may also be understood as second information included in the first message in the first aspect.

In a possible design, that a user plane function network element obtains information includes: The user plane function network element obtains the information from a network data analytics function network element, where the information is related to historical service information of the terminal device.

In a possible design, when a first processing unit is faulty or overloaded, the user plane function network element may further migrate the first service processed by the first processing unit, where the first processing unit is a processing unit managed by the user plane function network element. Using the design can dynamically implement load balancing between processing units in the user plane function network element. This is conductive to effective utilization of resources. It should be understood overloading implies that a service currently carried by the first processing unit has exceeded a first threshold. The first threshold may be a specified value, or a maximum service volume that may be carried by the first processing unit.

According to a third aspect, embodiments of this application provide a service processing method, including: A network data analytics function network element obtains historical service information of a terminal device from at least one user plane function network element; the network data analytics function network element determines first information based on the historical service information of the terminal device; and the network data analytics function network element sends the first information to a core network element, where the first information is for determining a transmission bandwidth of a first service to be accessed by the terminal device, and the transmission bandwidth of the first service exceeds a first threshold.

Using a data analysis function of the network data analytics function network element, the network data analytics function network element analyzes the historical service information of the terminal device to determine whether the terminal device has a requirement for accessing the high-bandwidth service, and determines the transmission bandwidth of the high-bandwidth service is determined. This helps select an appropriate user plane function network element or processing unit, to avoid network congestion.

In a possible design, the first information includes at least one of the following: a service type of the first service, a service level of the first service, time period-based transmission traffic information of the first service, transmission rate information of the first service, or the transmission bandwidth of the first service.

In a possible design, the core network element includes: a session management function network element, a policy control function network element, a unified data management network element, or a user plane function network element.

In a possible design, before sending the first information to the core network element, the network data analytics function network element obtains a message for requesting the first information, where the message is from the core network element, and the message includes identification information of the terminal device and/or identification information for requesting the first information.

According to a fourth aspect, embodiments of this application provide a service processing method, including: A policy control function network element determines first information; and the policy control function network element sends the first information to a session management function network element, where the first information is for determining a transmission bandwidth of a first service to be accessed by a terminal device, and the transmission bandwidth of the first service exceeds a first threshold.

In a possible design, the policy control function network element determines the first information from subscription information of the terminal device that is stored in the policy control function network element.

In a possible design, the policy control function network element obtains the first information from a network data analytics function network element, where the first information is related to historical service information of the terminal device.

In a possible design, the first information includes at least one of the following: a service type of the first service, a service level of the first service, time period-based transmission traffic information of the first service, transmission rate information of the first service, or the transmission bandwidth of the first service.

In a possible design, the first information further includes running time information of the first service.

According to a fifth aspect, embodiments of this application provide a service processing apparatus. The service processing apparatus may be a session management function network element, or may be an apparatus in a session management function network element, or may be an apparatus used together with a session management function network element. In a design, the service processing apparatus may include a one-to-one corresponding module for performing the method/operation/step/action described in the first aspect. The module may be a hardware circuit, or may be software, or may be implemented by a combination of a hardware circuit and software. In a design, the service processing apparatus may include a processing module and a communication module.

For example, the service processing apparatus includes:
a communication module, configured to obtain first information, where the first information indicates a first service to be accessed by a terminal device, a transmission bandwidth of the first service exceeds a first threshold, and the first information is for determining the transmission bandwidth of the first service; and
a processing module, configured to determine, based on the first information, a transmission bandwidth of the first service to be accessed by the terminal device, where the transmission bandwidth of the first service exceeds the first threshold.

The processing module is further configured to determine a target user plane function network element based on the transmission bandwidth of the first service.

The communication module is further configured to send a first message to the target user plane function network element, where the first message is for requesting the target user plane function network element to provide a service for the terminal device.

In a possible design, the first information includes at least one of the following: a service type of the first service, a service level of the first service, time period-based transmission traffic information of the first service, transmission rate information of the first service, or the transmission bandwidth of the first service.

In a possible design, the first information includes running time information of the first service, and the processing module is specifically configured to: determine the target user plane function network element based on the transmission bandwidth of the first service and the running time information of the first service.

In a possible design, the communication module is specifically configured to: obtain the first information from a network data analytics function network element, where the first information is related to historical service information of the terminal device.

In a possible implementation of the possible design, that the communication module is specifically configured to obtain the first information from a network data analytics function network element includes: The communication module is specifically configured to send a message to the network data analytics function network element, where the message includes identification information of the terminal device and/or identification information for requesting the first information; and the communication module is further specifically configured to receive the first information from the network data analytics function network element.

In a possible design, the communication module is specifically configured to obtain subscription information of the terminal device from a first network element, where the subscription information includes the first information. Optionally, the first network element includes a policy control function network element or a unified data management network element.

In a possible design, the first message includes second information, and the second information is for determining the transmission bandwidth of the first service. The second information includes at least one of the following: a service type of the first service, a service level of the first service, time period-based transmission traffic information of the first service, transmission rate information of the first service, or the transmission bandwidth of the first service.

According to a sixth aspect, embodiments of this application provide a service processing apparatus. The service processing apparatus may be a user plane function network element, or may be an apparatus in a user plane function network element, or may be an apparatus that may be used together with a user plane function network element. In a design, the service processing apparatus may include a one-to-one corresponding module for performing the method/operation/step/action described in the second aspect. The module may be a hardware circuit, or may be software, or may be implemented by a combination of a hardware circuit and software. In a design, the service processing apparatus may include a processing module and a communication module.

For example, the service processing apparatus includes:
a communication module, specifically configured to obtain information, where the information is for determining a transmission bandwidth of a first service to be accessed by a terminal device, where the transmission bandwidth of the first service exceeds a first threshold, and the user plane function network element supports the transmission bandwidth of the first service; and
a processing module, configured to determine a transmission bandwidth of the first service to be accessed by the terminal device based on the information, where the transmission bandwidth of the first service exceeds the first threshold, and the user plane function network element supports the transmission bandwidth of the first service.

The processing module is further configured to determine, based on the transmission bandwidth of the first service, at least one processing unit for processing the first service.

In a possible design, the information includes at least one of the following: a service type of the first service, a service level of the first service, time period-based transmission traffic information of the first service, transmission rate information of the first service, or the transmission bandwidth of the first service.

In a possible design, the communication module is specifically configured to receive a first message from a session management function network element, where the first message includes the information, and the first message is for requesting the user plane function network element to provide a service for the terminal device.

In a possible design, the communication module is specifically configured to obtain the information from a network data analytics function network element, where the information is related to historical service information of the terminal device.

In a possible design, the processing module is further configured to: when a first processing unit is faulty or overloaded, migrate the first service processed by the first processing unit, where the first processing unit is a processing unit managed by the user plane function network element.

According to a seventh aspect, embodiments of this application provide a service processing apparatus. The service processing apparatus may be a network data analytics function network element, may be an apparatus in a network data analytics function network element, or may be an apparatus that may be used together with a network data analytics function network element. In a design, the service processing apparatus may include a one-to-one corresponding module for performing the method/operation/step/action described in the third aspect. The module may be a hardware circuit, or may be software, or may be implemented by a combination of a hardware circuit and software. In a design, the service processing apparatus may include a processing module and a communication module.

For example, the service processing apparatus includes:
a communication module, configured to obtain historical service information of a terminal device from at least one user plane function network element; and
a processing module, configured to determine first information based on the historical service information of the terminal device, where the first information indicates a first service to be accessed by the terminal device, and a transmission bandwidth of the first service exceeds a first threshold.

The communication module is further configured to send the first information to a core network element, where the first information is for determining a transmission bandwidth of a first service to be accessed by the terminal device, and the transmission bandwidth of the first service exceeds a first threshold.

In a possible design, the first information includes at least one of the following: a service type of the first service, a service level of the first service, time period-based transmission traffic information of the first service, transmission rate information of the first service, or the transmission bandwidth of the first service.

In a possible design, the core network element includes: a session management function network element, a policy control function network element, a unified data management network element, or a user plane function network element.

In a possible design, the communication module is further configured to: before sending the first information to a core network element, obtain a message for requesting the first information, where the message is from the core network element, and the message includes identification information of the terminal device and/or identification information for requesting the first information.

According to an eighth aspect, embodiments of this application provide a service processing apparatus. The service processing apparatus may be a policy control function network element, or may be an apparatus in a policy control function network element, or may be an apparatus that may be used together with a policy control function network element. In a design, the service processing apparatus may include a one-to-one corresponding module for performing the method/operation/step/action described in the fourth aspect. The module may be a hardware circuit, or may be software, or may be implemented by a combination of a hardware circuit and software. In a design, the service processing apparatus may include a processing module and a communication module.

For example, the service processing apparatus includes:
a processing module, configured to determine first information, where the first information is for determining a transmission bandwidth of a first service to be accessed by a terminal device, and the transmission bandwidth of the first service exceeds a first threshold; and
a communication module, configured to send the first information to a session management function network element.

In a possible design, the processing module is configured to determine the first information from subscription information of the terminal device that is stored in the service processing apparatus.

In a possible design, the processing module is configured to obtain first information from a network data analytics function network element using the communication module, where the first information is related to historical service information of the terminal device.

In a possible design, the first information includes at least one of the following: a service type of the first service, a service level of the first service, time period-based transmission traffic information of the first service, transmission rate information of the first service, or the transmission bandwidth of the first service.

In a possible design, the first information further includes running time information of the first service.

According to a ninth aspect, the present disclosure provides a communication apparatus. The communication apparatus includes a processor, configured to implement the method described in any one of the first aspect to the fourth aspect. The communication apparatus may further include a memory, configured to store instructions and data. The memory is coupled to the processor. When executing the instructions stored in the memory, the processor may implement the method described in any one of the first aspect to the fourth aspect. The apparatus may further include a communication interface. The communication interface is used by the apparatus to communicate with another device. For example, the communication interface may be a transceiver, a circuit, a bus, a module, or another type of communication interface.

In a possible device, corresponding to the first aspect, the communication apparatus includes:
a memory, configured to store program instructions; and
a processor, configured to obtain first information by using a communication interface.

A processor is configured to determine, based on the first information, a transmission bandwidth of a first service to be accessed by a terminal device, where the transmission bandwidth of the first service exceeds a first threshold.

The processor is further configured to determine a target user plane function network element based on the transmission bandwidth of the first service, and send a first message to the target user plane function network element by using the communication interface, where the first message is for requesting the target user plane function network element to provide a service for the terminal device.

In a possible device, corresponding to the second aspect, the communication apparatus includes:
a memory, configured to store program instructions; and
a processor, configured to obtain information by using a communication interface.

The processor is configured to determine, based on the information, a transmission bandwidth of a first service to be accessed by a terminal device, where the transmission bandwidth of the first service exceeds a first threshold, and a user plane function network element supports the transmission bandwidth of the first service.

A processor is further configured to determine, based on the transmission bandwidth of the first service, at least one processing unit for processing the first service.

In a possible device, corresponding to the third aspect, the communication apparatus includes:
a memory, configured to store program instructions; and
a processor, configured to obtain historical service information of a terminal device from at least one user plane function network element by using a communication interface, and determine first information based on the historical service information of the terminal device.

The processor is further configured to send the first information to a core network element using a communication module, where the first information is for determining a transmission bandwidth of a first service to be accessed by the terminal device, and the transmission bandwidth of the first service exceeds a first threshold.

In a possible device, corresponding to the fourth aspect, the communication apparatus includes:
a memory, configured to store program instructions; and
a processor, configured to determine first information.

The processor is further configured to send the first information to a session management function network element using a communication module, where the first information is for determining a transmission bandwidth of a first service to be accessed by a terminal device, and the transmission bandwidth of the first service exceeds a first threshold.

According to a tenth aspect, the present disclosure provides a communication system, including the service processing apparatus described in the fifth aspect or any possible design in the fifth aspect, the service processing apparatus described in the sixth aspect or any possible design in the sixth aspect, the service processing apparatus described in the seventh aspect or any possible design in the seventh aspect, and the service processing apparatus described in the eighth aspect or any possible design in the eighth aspect.

According to an eleventh aspect, the present disclosure further provides a computer program. When the computer program runs on a computer, the computer is enabled to perform the method provided in any one of the first aspect to the fourth aspect.

According to a twelfth aspect, the present disclosure further provides a computer program product, including instructions. When the instructions run on a computer, the computer is enabled to perform the method provided in any one of the first aspect to the fourth aspect.

According to a thirteenth aspect, the present disclosure further provides a computer-readable storage medium. The computer-readable storage medium stores a computer program or instructions. When the computer program or the instructions runs/run on a computer, the computer is enabled to perform the method provided in the first aspect to the fourth aspect.

According to a fourteenth aspect, the present disclosure further provides a chip. The chip is configured to read a computer program stored in a memory, to perform the method provided in the first aspect to the fourth aspect.

According to a fifteenth aspect, the present disclosure further provides a chip system. The chip system includes a processor, configured to support a computer apparatus in implementing the method provided in the first aspect to the fourth aspect. In a possible design, the chip system further includes a memory. The memory is configured to store a program and data that are necessary for the computer apparatus. The chip system may include a chip, or may include a chip and another discrete component.

### BRIEF DESCRIPTION OF DRAWINGS

FIG. 1 is a schematic diagram of a network architecture according to an embodiment of this application;
FIG. 2 is a schematic flowchart of a service processing method according to an embodiment of this application;
FIG. 3 is a schematic flowchart of a service processing method according to an embodiment of this application;
FIG. 4 is a schematic flowchart of a service processing method according to an embodiment of this application;
FIG. 5 is a schematic flowchart of a service processing method according to an embodiment of this application;
FIG. 6 is a schematic flowchart of a service processing method according to an embodiment of this application;
FIG. 7 is a schematic flowchart of a service processing method according to an embodiment of this application;
FIG. 8 is a schematic flowchart of a service processing method according to an embodiment of this application;
FIG. 9 is a schematic diagram of a structure of a service processing apparatus according to an embodiment of this application; and
FIG. 10 is a schematic diagram of a structure of a communication apparatus according to the present disclosure.

### DESCRIPTION OF EMBODIMENTS

Embodiments of this application may be applied to a wireless communication network, for example, a 4th generation (4th generation, 4G) mobile communication technology network (such as LTE), a 5th generation (5th generation, 5G) mobile communication technology network, or a future network. The following further describes embodiments of this application in detail with reference to the accompanying drawings.

The following describes, by using an example in which a service processing method is applied to a 5G network, a network architecture that may be applied to the 5G network, or an application scenario in the 5G network.

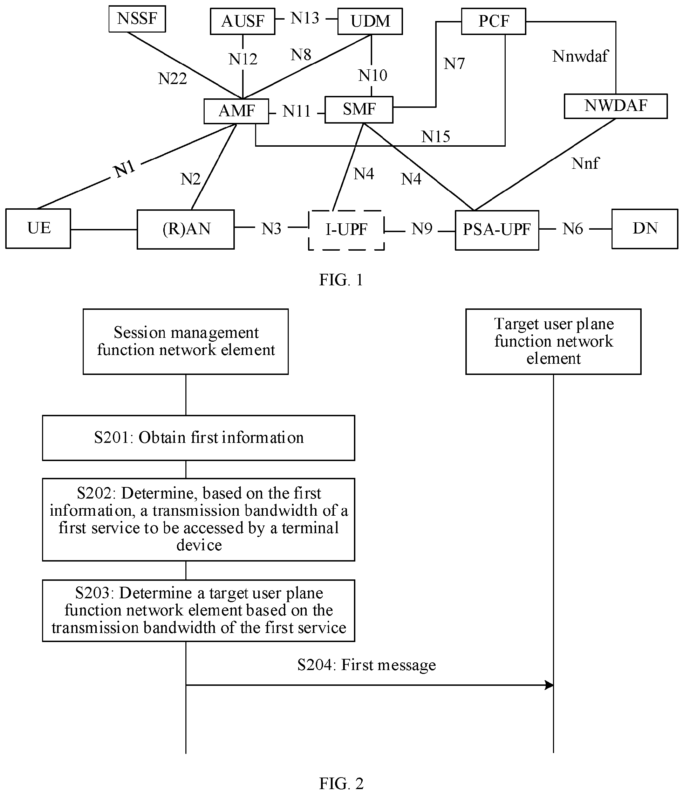

FIG. 1 shows a network architecture, mainly including a core network element, an access network (radio access network, RAN) device, and a terminal device (user equipment, UE). The core network element may include but is not limited to a network slice selection function (network slice selection function, NSSF) network element, an authentication server function (authentication server function, AUSF) network element, a unified data management (unified data management, UDM) network element, a policy control function (policy control function, PCF) network element, an access and mobility management function (access and mobility management function, AMF) network element, a session management function (session management function, SMF) network element, and a network data analytics function (network data analytics function, NWDAF) network element. Every two of these network elements may communicate with each other based on a method for a service. Certainly, if two network elements need to communicate with each other, one network element needs to open a corresponding service method to the other network element.

A mobility management function network element is, for example, the AMF in FIG. 1. The AMF is configured to manage mobile context of users, is mainly responsible for interworking with a wireless network, and has functions such as non-access-stratum (non-access-stratum, NAS) encryption and integrity protection, registration management, connection management, reachability management, mobility management, and transferring of session management (session management, SM) messages between a terminal device and an SMF, or mobility event notification of a terminal device. The AMF and the SMF correspond to a mobility management entity (mobility management entity, MME) in a 4G network. It may be considered that functions of the MME are distributed to the AMF and the SMF after evolution from 4G to 5G.

A session management function network element is, for example, the SMF in FIG. 1. The SMF is configured for session context management, and provides session management functions such as session establishment, modification, and release, including a tunnel maintenance function between the UPF and an access network (access network, AN) node, UE internet protocol (internet protocol, IP) address allocation and management, and dynamic host control protocol (dynamic host control protocol, DHCP) functions, and is responsible for managing non-session-level management functions such as UPF selection, policy delivery, event reporting, UPF heartbeat check, and UPF load reporting. For example, in the 5G network, a control plane is a next generation control plane (next generation control plane, NG-CP) that uses a service-based interface to provide related functions for external systems, and the user plane is a next generation user plane (next generation user plane, NG-UP). The NG-CP of the SMF and the NG-UP of the UPF exchange messages through an N4 interface, to deliver user policies from a control plane CP to a user plane UP and report events from the UP to the CP. In addition, it may be understood that UPF load may be a service volume distributed on the UPF.

A user plane function network element is, for example, a UPF in FIG. 1. Specifically, UPFs may be divided into an intermediate UPF (intermediate UPF, I-UPF) and an anchor UPF (PDU session anchor UPF, PSA-UPF). The UPF is an entity forwarded by user plane data, and is mainly responsible for connecting to an external network, for example, serving as an external packet data unit (packet data unit, PDU) session (session) point for data network interconnection, and has functions such as packet routing and forwarding, packet detection, user plane part of policy rule enforcement, lawful interception, traffic usage reporting, or quality of service (quality of service, QoS) handling. The UPF corresponds to a serving gateway (serving gateway, SGW) and a packet data network gateway (packet data network gateway, PDN-GW) in the 4G network. In the 5G system, a core network element includes a user plane function (user plane function, UPF) network element. It may be considered that the UPF in the 5G system is equivalent to a combination of the SGW and the PDN-GW in the 4G LTE system.

A unified data management network element is, for example, the UDM in FIG. 1. The UDM is configured to store user data, for example, subscription information of a terminal device, an attribute of the terminal device, and authentication/authorization information. The UDM may provide services for the AMF, the SMF, the NEF, and the AUSF through an Nudm service-based interface. For example, the AMF/SMF may obtain, from the UDM through the interface of the Nudm service, the subscription information of the terminal device related to the AMF/SMF.

A policy control function network element is, for example, the PCF in FIG. 1. The PCF supports unified policy framework to govern network behavior, provides policy rule information, or the like for a control plane function network element (such as an AMF or an SMF), and may also manage some subscription information of the terminal device, for example, access service-related subscription information of the terminal device, such as service policies and service access rules. The PCF may provide services for the AMF, the SMF, the NEF, and the AUSF through an Npcf service-based interface. For example, the AMF/SMF may obtain, from the PCF through the Npcf service-based interface, the subscription information of the terminal device related to the AMF/SMF.

An access network device is, for example, the (R)AN in FIG. 1. A main function of the (R)AN is to control a terminal device to access a mobile communication network in a wireless manner. The (R)AN is a part of a mobile communication system, or may be a radio access network (radio access network, RAN) device, or may be an access network (access network, AN) device. The (R)AN may also be understood as a base station device, or referred to as a base station. The base station may have a plurality of forms, for example, a macro base station, a micro base station, a relay station, and an access point. The (R)AN includes but is not limited to a next generation NodeB (next generation NodeB, gNB), an eNB, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, and the like in 5G, and may further include a wireless fidelity (wireless fidelity, Wi-Fi) access point (access point, AP), or the like.

The terminal device is, for example, the UE in FIG. 1, may also be referred to as user equipment, an access terminal, a terminal unit, a terminal station, a mobile station, a mobile console, a remote station, a remote terminal, a mobile device, a mobile terminal, a terminal, a wireless communication device, a terminal agent, a terminal apparatus, or the like. For example, the terminal device includes a handheld device, a vehicle-mounted device, a wearable device, or a computing device that has a wireless communication function. For example, the terminal device may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In FIG. 1, the NSSF may communicate with the AMF through an N22 interface. The AUSF may communicate with the AMF through an N12 interface, the AUSF may communicate with the UDM through an N13 interface, the UDM may communicate with the AMF through an N8 interface, the UDM may communicate with the SMF through an N10 interface, the PCF may communicate with the AMF through an N15 interface, the SMF may communicate with the AMF through an N11 interface, the SMF may communicate with the PCF through an N7 interface, and the SMF may communicate with the UPF through an N4 interface. Specifically, the UPF may be divided into an I-UPF and a PSA-UPF, the SMF may communicate with the I-UPF through the N4 interface, and the SMF may communicate with the PSA-UPF through the N4 interface. The PCF may communicate with the NWDAF through an Nnwdaf interface. The NWDAF may communicate with the UPF through an Nnf interface. Specifically, the NWDAF may communicate with the PSA-UPF through an Nnf interface. The AMF may communicate with the terminal device through an N1 interface, and the AMF may communicate with the (R)AN through a control plane (control plane, CP) interface such as an N2 interface, and air interface communication is performed between the terminal device and the (R)AN. The (R)AN may communicate with the UPF through an N3 interface. Specifically, the (R)AN may communicate with the I-UPF through the N3 interface. A data network (data network, DN) may communicate with the UPF through an N6 interface. Specifically, the DN may communicate with the PSA-UPF through the N6 interface. It should be understood that FIG. 1 is merely another example description of a network architecture to which embodiments of this application are applicable, and does not specifically limit a type, a quantity, a connection manner, and the like of network elements included in the network architecture to which this application is applicable.

It may be understood that the network element may also be referred to as an entity. For example, the session management function network element may also be referred to as a session management functional entity, the user plane function network element may also be referred to as a user plane functional entity, the policy control function network element may also be referred to as a policy control functional entity, the unified data management network element may also be referred to as a unified data management entity, and the network data analytics function network element may also be referred to as a network data analytics functional entity.

In addition, in FIG. 1, the network element mentioned above is described in an abbreviation form. For example, the session management function network element is briefly referred to as an SMF, the user plane function network element may also be briefly referred to as a UPF, the policy control function network element may also be briefly referred to as a PCF, the unified data management network element may also be briefly referred to as UDM, and the network data analytics function network element may also be briefly referred to as an NWDAF. Certainly, it should be noted that the SMF, the UPF, the UDM, the PCF, the NWDAF, and the like involved in embodiments of this application are merely names, and the names do not constitute any limitation on the network element. In the 5G system and another future communication system, the SMF, the UPF, the UDM, the PCF, the NWDAF, and the like may have other names. This is not specifically limited in embodiments of this application. For example, the UPF may be alternatively replaced with a UP. This is uniformly described herein, and details are not described below.

A user plane session establishment procedure, for example, a packet data unit (packet data unit, PDU) session (session) procedure, includes a process in which the SMF selects a UPF. The procedure may further include a process in which the UPF selects a processing unit. The processing unit is a processing unit in the user plane function network element. The UPF or the processing unit is usually responsible for user plane data forwarding and other processing.

Currently, the SMF usually selects, with reference to a load status of the UPF, a UPF with low load (for example, the load is lower than load of another UPF) to provide a service for the terminal device. For example, the load may be understood as a quantity of terminal devices for which services are currently provided by the UPF, or may be understood as a quantity of terminal devices for which services are currently provided by the UPF and a maximum quantity of terminal devices for which services are provided by the UPF. For example, if a current UPF 1 provides services for five terminal devices and can provide services for a maximum of 10 terminal devices, and if a current UPF 2 provides services for three terminal devices and can provide services for a maximum of 10 terminal devices, the UPF 2 is a UPF with lower load.

An example in which the SMF selects a UPF for a plurality of terminal devices is used. The SMF selects a same UPF for the plurality of terminal devices to establish a session. In other words, forwarding of data of the plurality of terminal devices is performed by the same UPF. If services to be accessed by some or all of the plurality of terminal devices have a high requirement for the transmission bandwidth, for example, a bandwidth requirement of the service is higher than an average value of transmission bandwidth requirements of services provided in a network, the UPF is incapable of supporting the service requirements of the plurality of terminal devices. Consequently, the UPF is overloaded, causing network congestion or even packet loss, and affecting users' service experience. In addition, there may be another UPF that is not overloaded in the current network; or even when the UPF is overloaded, the another UPF has no tasks to process, that is, the another UPF may be in an idle state. Consequently, load between the UPFs is unbalanced in the network, which is unconductive to effective utilization of resources.

Similarly, one UPF includes a plurality of processing units. The UPF usually selects, with reference to load statuses of the processing units, a processing unit with lower load (for example, the load is lower than load of another processing unit) to provide services for a plurality of terminal devices. For a case of the processing unit, refer to the foregoing description of the UPF. Details are not described herein.

Based on this, embodiments of this application provide a service processing method, which may be applied to the network architecture in FIG. 1. The method may avoid network congestion, ensure smooth service processing, and improve user experience. The following describes in detail the service processing method provided in embodiments of this application.

Referring to FIG. 2, an embodiment of this application provides a service processing method. The method may include the following steps.

S201: A session management function network element obtains first information.

For definition and application of the first information, refer to the following description. The first information indicates a first service to be accessed by a terminal device, and a transmission bandwidth of the first service exceeds a first threshold. It should be understood that the first service is a service having a high transmission bandwidth requirement, and the first service may also be referred to as a high-bandwidth service or an elephant flow service. An elephant flow is used to describe a high transmission bandwidth required by a service, or may have another name. This is not limited in embodiments of this application. In other words, a service having a high transmission bandwidth requirement, a high-bandwidth service, or an elephant flow service is a service whose service transmission bandwidth exceeds the first threshold. Optionally, the first threshold may be determined based on an average transmission bandwidth of the service. For example, the first threshold may be set to be greater than the average transmission bandwidth of the service. For another example, the first threshold may be set to be multiples of the average transmission bandwidth of the service, for example, five folds or ten folds. Alternatively, the first threshold may be defined as a specific value, for example, 500 Mbps.

Correspondingly, a terminal device having a requirement for accessing the first service may also be referred to as an elephant flow user. Optionally, the first information may include elephant flow user information, for example, an identifier indicating that the terminal device is an elephant flow user, or referred to as an elephant flow user identifier. The SMF may learn, based on the obtained first information, that the terminal device is an elephant flow user, and the terminal device has a requirement for accessing an elephant flow service, or it may be understood that the terminal device may access an elephant flow service.

The first information may include service information of the first service, and the service information of the first service may be understood as elephant flow service information. For example, the first information may include at least one of the following parameters or indication information of at least one of the following parameters: a service type of the first service, a service level of the first service, time period-based transmission traffic information of the first service, transmission rate information of the first service, or the transmission bandwidth of the first service. The service type may include a 5G emerging service such as VR, AR, MR, or a high-bandwidth cloud game. The time periodbased transmission traffic information may include service traffic in a specific time period, for example, a flow throughput, a quantity of concurrent flows, and a quantity of packets. The transmission rate information may include a peak rate and an average rate of a service, and may be specifically a peak rate, an average rate, or the like in a specific time period.

Specifically, the session management function network element may obtain the first information from another network element, or may obtain the first information using a pre-configured method. This is not limited in this application. For this step, refer to the description of S302 or S403 in subsequent embodiments.

S202: The session management function network element determines, based on the first information, the transmission bandwidth of the first service to be accessed by the terminal device.

For example, the first information includes the service type of the first service, and the session management function network element may determine the transmission bandwidth of the first service based on a mapping relationship between the service type and the transmission bandwidth. For another example, the first information includes the service level of the first service, and the session management function network element may determine the transmission bandwidth of the first service based on a mapping relationship between the service level and the transmission bandwidth. Transmission bandwidths corresponding to different service levels may be different. For example, it may be set that a higher service level corresponds to a higher transmission bandwidth. For another example, when the first information includes the time period-based transmission traffic information of the first service, the session management function network element may calculate an average transmission rate of the first service in the time period, and determine, based on the average transmission rate, a transmission bandwidth required for running the first service, namely, the transmission bandwidth of the first service. For another example, if the first information includes the transmission traffic information of the first service, the session management function network element may determine a transmission bandwidth associated with the transmission rate information as a transmission bandwidth required for running the first service, namely, the transmission bandwidth of the first service.

Further, the first information may further include running time information of the first service. For example, the running time information may include a start time point, an end time point, duration, and the like. Optionally, the running time information may indicate a common time period in which the terminal device accesses the first service. The session management function network element may determine, based on the first information, a time point at which the terminal device may access the high-bandwidth service, and may refer to the running time information of the first service when subsequently selecting the user plane function network element.

S203: The session management function network element determines a target user plane function network element based on the transmission bandwidth of the first service.

The target user plane function network element has a capability of processing the first service. Alternatively, it may be understood that the target UPF supports the transmission bandwidth of the first service.

Specifically, the session management function network element may determine, based on dynamic load (dynamic load) of the user plane function network element, whether the user plane function network element has a capability of processing the first service, or whether the user plane function network element supports the transmission bandwidth of the first service. The session management function network element may obtain the dynamic load of the user plane function network element in the following manner. The user plane function network element may periodically report a service distribution status of the user plane function network element to the session management function network element, for example, a service newly processed by the user plane function network element or a service that the user plane function network element stops processing. The session management function network element may update and record, based on the foregoing service distribution status reported by the user plane function network element, a distribution status of a service in the user plane function network element during establishment or deletion of a service-related session, to determine the dynamic load of the user plane function network element. Optionally, the session management function network element may select, as the target user plane function network element, a user plane function network element with low load and supporting the transmission bandwidth of the first service, to be specific, select a user plane function network element with low load to process the high-bandwidth service (or referred to as an elephant flow service). It should be understood that that the load of the user plane function network element selected by the session management function network element is low may mean that the load of the user plane function network element is lower than load of another user plane function network element managed by the session management function network element; or that the load of the user plane function network element selected by the session management function network element is low may mean that the load of the user plane function network element is lowest among load of all user plane function network elements managed by the session management function network element; or that the load is low may mean that the load is less than a preset load threshold. The preset load threshold may be set based on an actual situation. The method shown in another embodiment is similar. This is not limited in embodiments of this application. Using the design can implement load balancing at a granularity of a user plane function network element, and help improve users' service experience.

Optionally, if the session management function network element may obtain the running time information of the first service, for example, when the first information includes the running time information of the first service, the session management function network element may further determine the target user plane function network element with reference to the running time information of the first service and the transmission bandwidth of the first service. Specifically, the target user plane function network element may meet the following condition: In a time period indicated by the running time information of the first service, in addition to load of the target user plane function network element in the time period, the target user plane function network element can support the transmission bandwidth of the first service, or can process the first service, for example, session establishment and data forwarding related to the first service. Alternatively, optionally, it may be specified that the load of the target user plane function network element is low in a time period indicated by the running time information of the first service, so that the target user plane function network element can support the transmission bandwidth of the first service or can process the first service. In addition, optionally, it may be specified that the target user plane function network element does not process a plurality of high-bandwidth services (or referred to as elephant flow services) in a time period indicated by the running time information of the first service, or it may be understood that the target user plane function network element does not process a high-bandwidth service other than the first service.

Optionally, if the session management function network element determines that the plurality of user plane function network elements support the transmission bandwidth of the first service, the session management function network element may preferentially select a user plane function network element with lower load from the plurality of user plane function network elements as the target user plane function network element. Further, if the session management function network element may obtain the running time information of the first service, the session management function network element may specifically select, for the time period indicated by the running time information of the first service, a user plane function network element with lower load in the time period as the target user plane function network element. Alternatively, if the session management function network element may obtain the running time information of the first service, the session management function network element does not select, as the target user plane function network element specifically for the time period indicated by the running time information of the first service, a user plane function network element for processing another high-bandwidth service in the time period. Using the design can avoid that a plurality of high-bandwidth services (or referred to as elephant flow services) are processed by a same user plane function network element, and thereby avoid network congestion.

Optionally, the session management function network element may determine the target user plane function network element in the foregoing manner by taking the following information into consideration: location information of the terminal device, access traffic steering, switching and splitting (access traffic steering, switching and splitting, ATSSS) guidance capability information related to a session of the terminal device, for example, ATSSS low-layer (ATSSS low-layer, ATSSS-LL) capability information and/or multipath transmission control protocol (multipath transmission control protocol, MPTCP) capability information, or another factor.

S204: The session management function network element sends a first message to the target user plane function network element.

The first message is for requesting the target user plane function network element to provide a service for the terminal device. For example, the first message is for requesting the target user plane function network element to process the first service, for example, request the target user plane function network element to perform session establishment or data forwarding related to the first service.

Specifically, the session management function network element may send the first message to the target user plane function network element through an N4 interface. Currently, the user plane function network element may receive the first message through the N4 interface. For example, the first message sent by the session management function network element to the target user plane function network element may be a session establishment request message, and the session establishment request message may be specifically for requesting the target user plane function network element to establish a session of the terminal device. The session establishment request message may be specifically implemented by using an N4 session establishment request (N4 session establishment request) message.

Further, after receiving the first message, the user plane function network element may perform a session establishment procedure, to provide a user plane session that meets a service-level agreement (service-level agreement, SLA) indicator. The SLA indicator may include at least one of the following indicators defined in a related protocol: an end-to-end delay indicator, a single-user peak rate, a single-stream peak rate, a packet loss rate, a minimum guaranteed bandwidth, and the like. Optionally, in response to the first message, the user plane function network element may further send a session establishment response message, for example, an N4 session establishment response (N4 session establishment response) message, to the session management function network element after completing the session establishment procedure.

In the solution in FIG. 2, when selecting the user plane function network element for the terminal device, the session management function network element considers a transmission bandwidth requirement for accessing a high-bandwidth service by the terminal device, to avoid network congestion and implement load balancing at a granularity of a user plane function network element. The method in this embodiment can also improve resource utilization in an entire network, and reduce operators' network deployment costs.

In addition, it should be noted that the method provided in FIG. 2 may be applied to the network architecture shown in FIG. 1, or may be applied to another core network architecture in which no NWDAF is deployed. This is not limited in embodiments of this application.

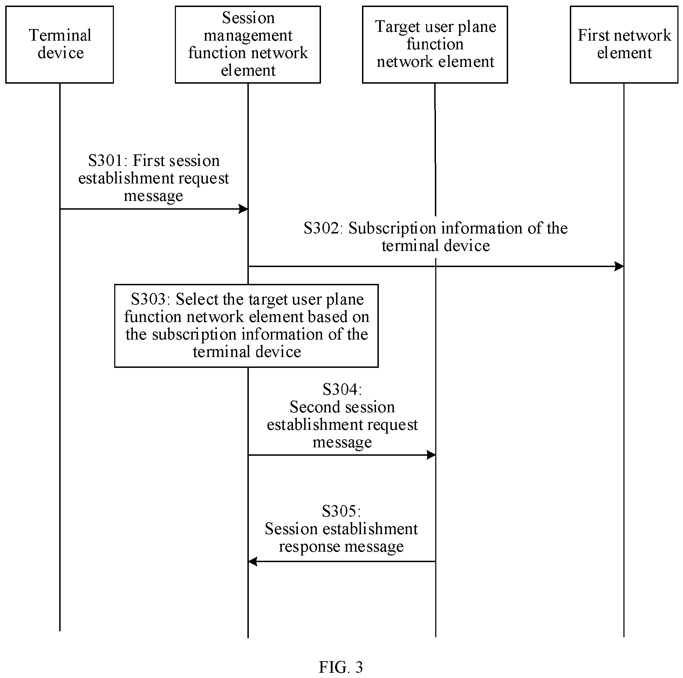

With reference to the method in FIG. 2, FIG. 3 shows a service processing method. The method may include the following steps.

S301: A terminal device sends a first session establishment request message to a session management function network element.

For example, the terminal device initiates a session establishment procedure to the session management function network element, to be specific, the terminal device sends the first session establishment request message to the session management function network element.

In this embodiment, an example in which the terminal device requests to establish a PDU session is used. The first session establishment request message may be a PDU session establishment request message. The session management function network element may specifically obtain the PDU session establishment request message from the terminal device through an Nsmf. For example, the terminal device sends an Nsmf_PDUSession_CreateSMContext Request (Nsmf_PDUSession_CreateSMContext Request) message to the session management function network element.

S302. The session management function network element obtains subscription information of the terminal device from a first network element.

For this step, refer to the description of step S201. If the terminal device in S301 is an elephant flow user, the subscription information of the terminal device includes first information. Specifically, the first information includes elephant flow user information and/or elephant flow service information. The session management function network element may determine, based on whether the obtained subscription information of the terminal device includes the elephant flow user information and/or the elephant flow service information, whether the terminal device is an elephant flow user.

The first network element may include a policy control function network element or a unified data management network element.

Optionally, the session management function network element may obtain, through subscription, the subscription information of the terminal device from the policy control function network element or the unified data management network element. In this embodiment, an example in which a session management network obtains the subscription information of the terminal device from the policy control function network element is used. The session management function network element may send an Npcf_SMPolicy Control_Create Request (Npcf_SMPolicy Control_Create Request) message to the policy control function network element, where the Npcf_SMPolicy Control_Create Request message is for requesting the subscription information of the terminal device. The policy control function network element may send an Npcf_SMPolicy Control Create Response (Npcf_SMPolicy Control_Create Response) message to the session management function network element, and send the subscription information of the terminal device to the session management function network element. The policy control function network element sends the Npcf_SMPolicy Control Create Response message to the session management function network element, where the Npcf_SMPolicy Control Create Response message includes the subscription information of the terminal device.

S303: The session management function network element selects a target user plane function network element based on the subscription information of the terminal device.

The target user plane function network element provides a service for the terminal device. For example, the target user plane function network element may be used to process forwarding of data related to an access service of the terminal device. When the subscription information of the terminal device includes the first information, the session management function network element may select the user plane function network element based on the first information in the subscription information of the terminal device. For this step, refer to the description of the foregoing step S202 and step S203.

S304: The session management function network element sends a second session establishment request message to the target user plane function network element.

For implementation of this step, refer to the foregoing step S204. The second session establishment request message may be an implementation of the first message in S204.

The second session establishment request message may be specifically an N4 session establishment request message. Optionally, the second session establishment request message may carry the elephant flow user information and/or the elephant flow service information.

Specifically, the target user plane function network element may be an anchor UPF (PDU session anchor UPF, PSA-UPF).

S305: The target user plane function network element sends a session establishment response message to the session management function network element.

For example, corresponding to step S304, the session establishment response message may be an N4 session establishment response message.

It may be understood that the session establishment response message is a response message of the second session establishment request message in step S305, and the response message may indicate that session establishment is completed.

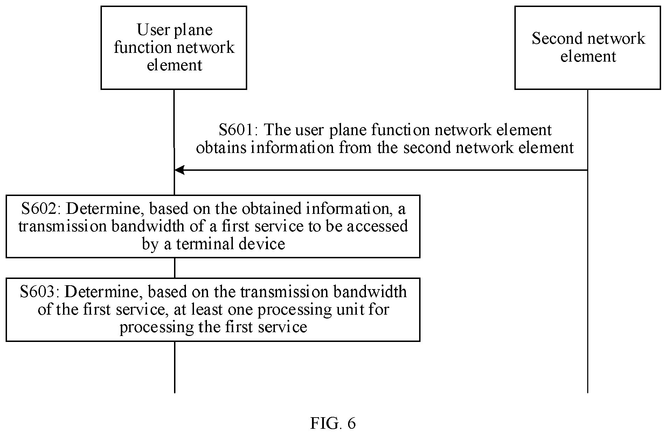

In addition, specifically, the target user plane function network element may further select a processing unit to establish a session. For example, the target user plane function network element may select a processing unit by taking load corresponding to the elephant flow user information and/or the elephant flow service information into consideration. The processing unit is at least one processing unit in the target user plane function network element. For the method, refer to the description of the method in FIG. 6 to FIG. 8. After selecting a processing unit to establish the session, the target user plane function network element may send the session establishment response message to the session management function network element. In other words, the session establishment response message in this step may be sent after step S304, or may be sent after the target user plane function network element selects the processing unit to establish the session. This is not limited in embodiments of this application.

In the solution described in FIG. 3, the policy control function network element or the unified data management network element supports including the first information in the subscription information of the terminal device, and the first information is for determining a transmission bandwidth requirement of the terminal device for accessing the high-bandwidth service. The session management function network element selects a user plane function network element for the terminal device to establish a session by taking the following into consideration: a transmission bandwidth requirement for accessing the high-bandwidth service by the terminal device, so that network congestion may be avoided and load balancing at a granularity of a user plane function network element can be implemented. The method in this embodiment can also improve resource utilization in an entire network, and reduce operators' network deployment costs.

In addition, it should be noted that the method provided in FIG. 3 may be applied to the network architecture shown in FIG. 1, or may be applied to another core network architecture in which no network data analytics function network element is deployed. This is not limited in embodiments of this application.

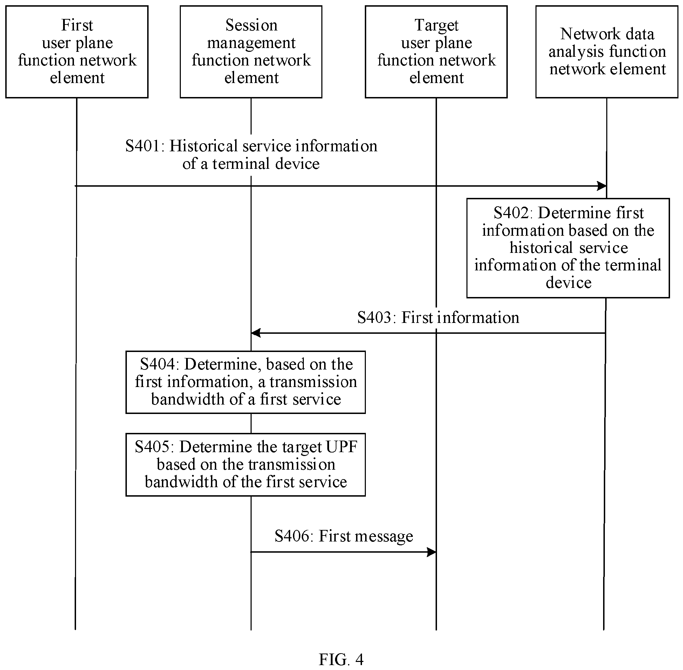

With reference to the method in FIG. 2, FIG. 4 shows a service processing method. The method may include the following steps.

S401: A network data analytics function network element obtains historical service information of a terminal device from at least one user plane function network element.

The historical service information of the terminal device may also be understood as service information of a historical access service of the terminal device. The at least one user plane function network element includes a user plane function network element that historically provides a service for the terminal device, at least one user plane function network element that supports collection of the historical service information of the terminal device, or at least one user plane function network element that supports collection of service information of the historical access service of the terminal device.

For example, S401 in FIG. 4 shows that the network data analytics function network element obtains the historical service information of the terminal device from the first user plane function network element. Optionally, the first user plane function network element may be of a PSA-UPF type. It should be understood that the network data analytics function network element may alternatively obtain the historical service information of the terminal device from the first user plane function network element and another user plane function network element, for example, obtain the historical service information of the terminal device from the first user plane function network element and the target user plane function network element shown in the figure. This is not shown in the figure. It should be understood that when the action of obtaining the historical service information is performed, the target user plane function network element has not yet been selected, and is merely a network element apparatus similar to the first user plane function network element.

Optionally, the network data analytics function network element may obtain the historical information of the terminal device from the first user plane function network element with reference to the following implementation A1 or implementation A2.

Implementation A1: The first user plane function network element may actively report the collected historical service information of the terminal device to the network data analytics function network element. For example, the first user plane function network element may periodically or irregularly actively report the collected historical service information of the terminal device to the network data analytics function network element. For another example, the first user plane function network element locally configures function switch control, and the first user plane function network element may determine, based on the locally configured function switch control, whether the first user plane function network element may report the historical service information of the terminal device to the network data analytics function network element.

Implementation A2: The first user plane function network element may support a subscription instruction of the network data analytics function network element for the historical service information of the terminal device, and the network data analytics function network element may obtain, through subscription, the historical service information of the terminal device from the first user plane function network element. Specifically, the NWDAF may send the subscription instruction to the first user plane function network element through an Nnf interface, to request the historical service information of the terminal device. The first user plane function network element may send the historical service information of the terminal device to the network data analytics function network element through an Nnf interface.

Specifically, the historical service information of the terminal device may include at least one of the following: a service type of a historical access service of the terminal device, a service level of the historical access service of the terminal device, time period-based transmission traffic information of the historical access service of the terminal device, transmission rate information of the historical access service of the terminal device, and a transmission bandwidth of the historical access service of the terminal device. The service type of the historical access service of the terminal device may include conventional services such as a short message service and a telephone service, and 5G emerging services such as VR, AR, MR, and a high-bandwidth cloud game. The time period-based transmission traffic information may include service traffic in a specific time period, for example, a flow throughput, a quantity of concurrent flows, and a quantity of packets. The transmission rate information may include a peak rate and an average rate of a service, and may be specifically a peak rate, an average rate, or the like in a specific time period. If the service type of the historical access service of the terminal device is video, VR, or AR, the historical service information of the terminal device may further include indicators such as clarity and a bit rate of the service historically accessed by the terminal device. It should be understood that regardless of whether the network data analytics function network element obtains the historical service information from one or more user plane function network elements, content of the historical service information obtained by the network data analytics function network element is the same.

S402: The network data analytics function network element determines first information based on the historical service information of the terminal device.

For a definition and application of the first information, refer to the description of step S201. Details are not described in this embodiment of this application.

Specifically, the network data analytics function network element may analyze the historical service information of the terminal device, to determine whether the terminal device has accessed a high-bandwidth service (or referred to as an elephant flow service). For the terminal device that has accessed the high-bandwidth service, the network data analytics function network element may determine the first information, for example, elephant flow user information and/or elephant flow service information, based on service information of the high-bandwidth service that is historically accessed by the terminal device. Alternatively, it may be understood that the network data analytics function network element may determine, based on the service information of a high-bandwidth service that is historically accessed by the terminal device, that the terminal device has a requirement for accessing the high-bandwidth service, and predict a transmission bandwidth required by the high-bandwidth service accessed by the terminal device.

Specifically, the network data analytics function network element may determine, with reference to any one of the following two implementations, whether the terminal device has accessed the high-bandwidth service.

In an implementation, the network data analytics function network element may perform absolute quantitative analysis on the historical service information of the terminal device, to determine whether the terminal device has accessed the high-bandwidth service (or referred to as an elephant flow service). For example, corresponding to the case that the first threshold may be a specific value described in step S201, the network data analytics function network element may set an absolute lower limit value, for example, 500 Mbps. The network data analytics function network element determines, based on the historical service information of the terminal device, one or more transmission bandwidths required by the historical access service of the terminal device. If there is a transmission bandwidth that exceeds the absolute lower limit in the one or more transmission bandwidths, the network data analytics function network element may determine that the terminal device has accessed the high-bandwidth service; or if there is no transmission bandwidth that exceeds the absolute lower limit in the one or more transmission bandwidths, the network data analytics function network element may determine that the terminal device has accessed the high-bandwidth service.

In another implementation, the network data analytics function network element may perform relative quantitative analysis on the historical service information of the terminal device, to determine the first information. For example, corresponding to the description of step S201 that the first threshold is determined based on an average transmission bandwidth of the service, the network data analytics function network element determines, based on the historical service information of the terminal device, an average transmission bandwidth required for the historical access service of the terminal device, and sets a relative lower limit value relative to the average transmission bandwidth. For example, the relative lower limit value is set to five times the average transmission bandwidth. If there is a transmission bandwidth that exceeds the relative lower limit in the one or more transmission bandwidths, the network data analytics function network element may determine that the terminal device has accessed the high-bandwidth service; or if there is no transmission bandwidth that exceeds the relative lower limit in the one or more transmission bandwidths, the network data analytics function network element may determine that the terminal device has accessed the high-bandwidth service. Optionally, after analyzing the historical service information of the terminal device, the network data analytics function network element may further perform user profiling on the terminal device based on an analysis result. For example, the network data analytics function network element may mark the terminal device that has accessed the high-bandwidth service as an elephant flow user, and mark the terminal device that has not historically accessed the high-bandwidth service as a non-elephant flow user. It may be understood that the elephant flow user may indicate a terminal device that has a requirement for accessing the high-bandwidth service.

Optionally, the network data analytics function network element may further analyze at least one user plane function network element that reports the historical service information of the terminal device, and determine, from the at least one user plane function network element, a candidate user plane function network element suitable for sharing the high-bandwidth service (namely, the first service). The network data analytics function network element may further include an identifier of a candidate user plane function network element in the first information, to assist the session management function network element in determining the user plane function network element that processes the first service.

Alternatively, the network data analytics function network element may determine, from at least one user plane function network element that reports the historical service information of the terminal device, a non-candidate user plane function network element that is unsuitable for sharing the high-bandwidth service. The network data analytics function network element may further include an identifier of a non-candidate user plane function network element in the first information, to assist the session management function network element in determining the user plane function network element that processes the first service.

Alternatively, the network data analytics function network element may obtain load statuses of a plurality of user plane function network elements managed by the session management function network element, and indicate the load statuses of the plurality of user plane function network elements to the policy control function network element. When obtaining the first information from the network data analytics function network element, the policy control function network element determines, based on the first information and a load status of the at least one user plane function network element, a candidate user plane function network element suitable for sharing the high-bandwidth service. Then, when the session management function network element subscribes to or queries the first information from the policy control function network element, the policy control function network element may include the identifier of the candidate user plane function network element in the first information; and then send, to the session management function network element, the first information including the identifier of the candidate user plane function network element, to assist the session management function network element in determining the user plane function network element that processes the first service.

S403: The session management function network element obtains the first information from the network data analytics function network element.

The first information in this step is the first information determined by the network data analytics network element in S402. For a related definition and application, refer to step S201 for understanding.

Specifically, the session management function network element may obtain the first information from the network data analytics function network element based on the following implementation B1 or implementation B2.

In the implementation B 1, the network data analytics function network element may provide a subscription capability or a query capability for the session management function network element, and the session management function network element may directly obtain, through subscription or querying, the first information from the network data analytics function network element.

For example, the network data analytics function network element supports providing the session management function network element with a capability of subscribing/unsubscribing the first information through an Nnwdaf_AnalyticsSubscription_Subscribe (Nnwdaf_AnalyticsSubscription_Subscribe) message/Nnwdaf_AnalyticsSubscription_Unsubscribe (Nnwdaf_AnalyticsSubscription_Unsubscribe) message. Optionally, the Nnwdaf_AnalyticsSubscription_Subscribe message sent by the session management function network element to the network data analytics function network element may carry identification information of the terminal device and identification information for requesting the first information. The identification information of the terminal device may be implemented by using a subscription permanent identifier (subscription permanent identifier, SPI) of the terminal device. The identification information for requesting the first information may be implemented by using an elephant flow user identifier. When determining that the terminal device is an elephant flow user or the terminal device has a requirement for accessing a high-bandwidth service, the network data analytics function network element returns an Nnwdaf_Analytics_Subscription_Notify (Nnwdaf_AnalyticsSubscription_Notify) message to the session management function network element, where the Nnwdaf_AnalyticsSubscription_Notify message may carry the SPI of the terminal device and the first information.

For another example, the network data analytics function network element supports providing a capability of querying the first information through an Nnwdaf_AnalyticsInfo_Request (Nnwdaf_AnalyticsInfo_Request) message. A query request message sent by the session management function network element to the network data analytics function network element may be an Nnwdaf AnalyticsInfo Request message, where the Nnwdaf_AnalyticsInfo_Request message carries the SPI of the terminal device and the elephant flow user identifier. When determining that the terminal device is an elephant flow user or the terminal device has a requirement for accessing a high-bandwidth service, the network data analytics function network element may return a query response message to the session management function network element, for example, an Nnwdaf_AnalyticsInfo_Response (Nnwdaf_AnalyticsInfo_Response) message, where the Nnwdaf AnalyticsInfo Response message may carry the SPI of the terminal device and the first information.

In the implementation B2, the network data analytics function network element may provide the subscription capability or the query capability for the policy control function network element or the unified data management network element. The policy control function network element/the unified data management network element may obtain, through subscription or querying, the first information from the network data analytics function network element. For details, refer to the manner in which the session management function network element obtains the first information from the network data analytics function network element in the foregoing optional implementation. Details are not described in this embodiment of this application. Further, the session management function network element may request, through subscription or querying, the first information from the policy control function network element or the unified data management network element. In other words, the session management function network element obtains the first information from the network data analytics function network element via the policy control function network element or the unified data management network element.

S404: The session management function network element determines a transmission bandwidth of the first service based on the first information.

Specifically, for implementation, refer to the manner in step S202. Details are not described in this embodiment of this application.

S405: The session management function network element determines a target user plane function network element based on the transmission bandwidth of the first service.

The target user plane function network element has a capability of processing the first service. Alternatively, it may be understood that the target user plane function network element supports the transmission bandwidth of the first service.

Specifically, for implementation, refer to the manner in step S203. Details are not described in this embodiment of this application. Alternatively, corresponding to step S401, when the first information includes identification information of a candidate user plane function network element or identification information of a non-candidate user plane function network element, the session management function network element may further select some user plane function network elements based on the first information, and then determine the target user plane function network element based on the transmission bandwidth of the first service in the manner in step S203.

S406: The session management function network element sends a first message to the target user plane function network element.

The first message is for requesting the target user plane function network element to provide a service for the terminal device, for example, request the target user plane function network element to perform session establishment or data forwarding related to the first service.

Specifically, for implementation, refer to the manner in step S204. Details are not described in this embodiment of this application.

In the foregoing solution, the network data analytics function network element analyzes the historical service information of the terminal device by using its data analysis function to determine the first information. The first information may be for determining an access requirement of the terminal device for the high-bandwidth service and the transmission bandwidth of the service. The session management function network element selects a user plane function network element for the terminal device by taking a transmission bandwidth requirement for accessing the high-bandwidth service by the terminal device into consideration, so that load balancing can be implemented at a granularity of a user plane function network element and network congestion can be avoided. In addition, resource utilization of the entire network can also be improved, and further operators' network deployment costs are reduced.

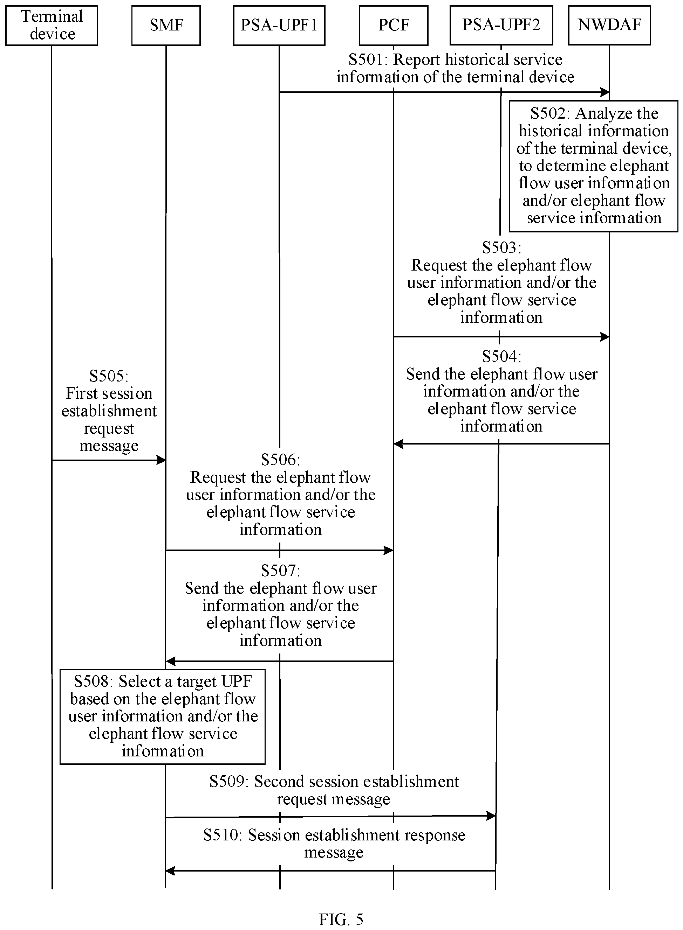

With reference to the method in FIG. 4, FIG. 5 shows a service processing method. In the method shown in FIG. 5, an NWDAF may be the network data analytics function network element in the method in FIG. 4, an SMF is the session management function network element in the method in FIG. 4, a UPF is the user plane function network element in the method in FIG. 4, a PCF may be the policy control function network element in the method in FIG. 4, a PSA-UPF 1 may be the first user plane function network element in the method described in FIG. 4, and a PSA-UPF 2 is the target user plane function network element in the method described in FIG. 4. The method may include the following steps.

S501: A PSA-UPF 1 reports historical service information of a terminal device to an NWDAF.

For this step, refer to the description of step S401.

S502: The NWDAF analyzes the historical information of the terminal device, to determine elephant flow user information and/or elephant flow service information.

For this step, refer to the description of step S402. For definitions of an elephant flow user and an elephant flow service, refer to the description of S201 for understanding. Details are not described in this embodiment of this application.

S503: A PCF requests the elephant flow user information and/or the elephant flow service information from the NWDAF.

For example, the PCF sends an Nnwdaf_AnalyticsSubscription_Subscribe message to the NWDAF. Alternatively, the PCF sends an Nnwdaf_AnalyticsInfo_Request message to the NWDAF. The Nnwdaf_AnalyticsSubscription_Subscribe message or the Nnwdaf_AnalyticsInfo_Request message is for requesting the elephant flow user information and/or the elephant flow service information.

S504: The NWDAF sends the elephant flow user information and/or the elephant flow service information to the PCF.

For example, the NWDAF sends the Nnwdaf_AnalyticsSubscription_Subscribe message to the PCF in response to the Nnwdaf_AnalyticsSubscription_Subscribe message received in S503. Alternatively, the NWDAF sends the Nnwdaf_AnalyticsInfo_Response message to the PCF in response to the Nnwdaf_AnalyticsInfo_Request message received in S503.

For step S503 and step S504, refer to the description of step S403.

S505: The terminal device sends a first session establishment request message to an SMF.

For example, the terminal device initiates a session establishment procedure to the SMF. In other words, the terminal device sends the first session establishment request message to the SMF.

In this embodiment, an example in which the terminal device requests to establish a PDU session is used. The SMF may specifically obtain the PDU session establishment request message from the terminal device through the Nsmf. For example, the terminal device sends an Nsmf_PDUSession_CreateSMContext Request (Nsmf_PDUSession_CreateSMContext Request) message to the SMF.

S506: An SMF requests the elephant flow user information and/or the elephant flow service information from the PCF.

For example, the SMF sends an Npcf_SMPolicy Control_Create Request message to the PCF, where the Npcf_SMPolicy Control Create Request message is for requesting the elephant flow user information and/or the elephant flow service information.

S507: The PCF sends the elephant flow user information and/or the elephant flow service information to the SMF.

For example, the PCF sends an Npcf_SMPolicy Control_Create Response message to the SMF, where the Npcf_SMPolicy Control_Create Response message includes the elephant flow user information and/or the elephant flow service information.

For step S506 and step S507, refer to the description of step S403.

S508: The SMF selects a target user plane function network element based on the elephant flow user information and/or the elephant flow service information, and the target user plane function network element shown in FIG. 5 may be a PSA-UPF 2.

Specifically, when the terminal device is the elephant flow user, the SMF may select, based on the elephant flow user information and/or the elephant flow service information related to the terminal device, the target user plane function network element to provide a service for the terminal device. For example, the target user plane function network element may be used to process forwarding of data related to an access service of the terminal device. For this step, refer to the description of step S404 and step S405.

S509: The SMF sends a second session establishment request message to the PSA-UPF 2.

For implementation of this step, refer to the foregoing step S204 or S406. The second session establishment request message may be an implementation of the first message in S204 or S406. The second session establishment request message may be specifically an N4 session establishment request message. Optionally, the N4 session establishment request message may carry the elephant flow user information and/or the elephant flow service information.

S510: The PSA-UPF 2 sends a session establishment response message to the SMF.

This step may be implemented with reference to the description of step S204 or S406. For example, the session establishment response message may be an N4 session establishment response message.

It may be understood that the session establishment response message is a response message of the second session establishment request message in step S509, and the response message may indicate that session establishment is completed.

In addition, specifically, the PSA-UPF 2 may further select a processing unit to establish a session. For example, the PSA-UPF 2 may select a processing unit by taking load corresponding to the elephant flow user information and/or the elephant flow service information into consideration. The processing unit is at least one processing unit in the PSA-UPF 2. For the method, refer to the description of the method in Solution 2. After selecting a processing unit to establish the session, the PSA-UPF 2 may send the session establishment response message to the session management function network element. In other words, the session establishment response message in this step may be sent after step S509, or may be sent after the PSA-UPF 2 selects the processing unit to establish the session. This is not limited in embodiments of this application.

In the solution shown in FIG. 5, the NWDAF analyzes whether the terminal device has a transmission bandwidth requirement for accessing a high-bandwidth service. When selecting a UPF for the terminal device to establish a session, the SMF obtains the foregoing information from the NWDAF, and considers the transmission bandwidth requirement for accessing the high-bandwidth service by the terminal device, to avoid network congestion and implement load balancing at a granularity of a UPF. The method in this embodiment can also improve resource utilization in an entire network, and reduce operators' network deployment costs.

Referring to FIG. 6, an embodiment of this application provides a service processing method. The method is mainly performed by a user plane function network element. The method may include the following steps.

S601: The user plane function network element obtains information from a second network element.

The information is for determining a transmission bandwidth of a first service to be accessed by a terminal device, and the transmission bandwidth of the first service exceeds a first threshold. Alternatively, it may be understood that the information is for determining a transmission bandwidth of a high-bandwidth service to be accessed by the terminal device. The user plane function network element has a capability of processing the first service. For example, the user plane function network element can support the transmission bandwidth of the first service.

It should be understood that the user plane function network element may alternatively obtain information from another network element, or obtain information in another manner. This is not limited in this application. In this step, the user plane function network element finally obtains the information.

Optionally, the user plane function network element described in S601 may be the target user plane function network element in the method in FIG. 2 to FIG. 4; or the user plane function network element described in S601 may be a predefined user plane function network element for processing the high-bandwidth service.

The second network element may be the session management function network element in FIG. 2 to FIG. 4, or may be the network data analytics function network element in FIG. 4.

An example in which the second network element is the session management function network element is used. The following describes in detail with reference to an implementation C1 or an implementation C2.

In the implementation C 1, the information obtained by the user plane function network element from the session management function network element in S601 may be the first information in the solution in FIG. 2. Details are not described in this embodiment of this application.

In the implementation C2, based on step S204 in FIG. 2 or step S406 in FIG. 4, a first message in the user plane function network element of the session management function network element may include second information, and the information obtained by the user plane function network element from the session management function network element in S601 may be equivalent to the second information. For example, the user plane function network element may receive the first message from the session management function network element, where the first message includes the second information. Specifically, the second information may be information whose function is the same as a function of the first information, but content included in the second information is different from content of the first information. Optionally, the second information may include at least one of the following parameters or indication information of at least one of the following parameters: a service type of the first service, a service level of the first service, time period-based transmission traffic information of the first service, transmission rate information of the first service, or the transmission bandwidth of the first service. For example, content included in the second information is different from content of the first information, and may be represented as follows: The first information includes the service type of the first service, and the first message that is sent by the session management function network element to the target user plane function network element carries the second information. The second information may be specifically the transmission bandwidth of the first service.

An example in which a second network element is a network data analytics function network element is used. The following describes in detail with reference to an implementation D.

In the implementation D, the information in S601 may be equivalent to the first information in the method in FIG. 4, and the information in S601 may be understood with reference to the description of the first information in step S402. Specifically, the user plane function network element obtains the information from the network data analytics function network element, where the information is related to historical service information of the terminal device, and the information may include elephant flow user information, elephant flow service information, and the like. The user plane function network element may obtain, through subscription or querying, the first information from the network data analytics function network element. For details, refer to the method for obtaining the first information from the network data analytics function network element by the session management function network element in the foregoing implementation B1 or implementation B2. Details are not described in this embodiment of this application.

S602: The user plane function network element determines a transmission bandwidth of a first service based on the obtained information.

Specifically, for an action of determining the transmission bandwidth of the first service, refer to the description of S202.

S603: The user plane function network element determines, based on the transmission bandwidth of the first service, at least one processing unit for processing the first service.

Specifically, the user plane function network element may allocate the first service to a plurality of processing units managed by the user plane function network element for processing, and load of the plurality of processing units allows the plurality of processing units to support processing of some services in the first service. Alternatively, the user plane function network element may centralize the first service to a processing unit with lower load managed by the user plane function network element for processing. Alternatively, when selecting a processing unit for processing the first service, the user plane function network element may avoid a processing unit that processes another high-bandwidth service, to be specific, may set that another high-bandwidth service is not distributed on the at least one processing unit for processing the first service. Using the design can avoid that a plurality of high-bandwidth services (or referred to as elephant flow services) are processed by a same processing unit in the user plane function network element, thereby avoiding network congestion.

Further, optionally, when the processing unit is faulty or has a congestion risk due to overload, the user plane function network element may migrate services distributed on the processing unit to another user plane function network element in the user plane function network element, to implement load balancing between user plane function network elements in the user plane function network element. For example, when the processing unit for processing the high-bandwidth service is faulty or overloaded, the user plane function network element may migrate the high-bandwidth services distributed on the processing unit. For example, it is assumed that the user plane function network element determines to use a first processing unit managed by the user plane function network element to process the first service. When the first processing unit is faulty or overloaded, the user plane function network element may migrate the first service processed by the first processing unit.

In the foregoing solution, the user plane function network element selects, based on the information obtained from the session management function network element or the NWDAF and by taking a transmission bandwidth requirement for accessing the high-bandwidth service by the terminal device into consideration, at least one processing unit for processing the high-bandwidth service, so that load balancing can be implemented at a granularity of a processing unit in the user plane function network element, and network congestion can be avoided. In addition, resource utilization of the entire network can also be improved, and further operators' network deployment costs are reduced.

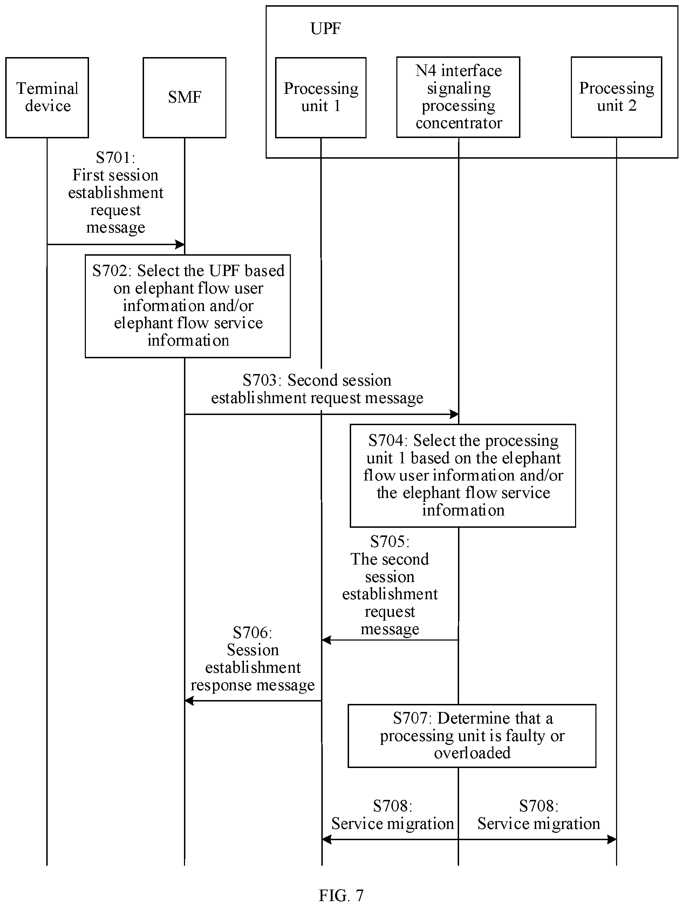

With reference to the method in FIG. 6, FIG. 7 shows a service processing method. An SMF in FIG. 7 is the session management function network element in the method in FIG. 6, and a UPF is the user plane function network element in the method in FIG. 6. The method may include the following steps.

S701: A terminal device sends a first session establishment request message to an SMF.

For example, the terminal device initiates a session establishment procedure to the SMF. In other words, the terminal device sends the first session establishment request message to the SMF.

In this embodiment, an example in which the terminal device requests to establish a PDU session is used. The SMF may specifically obtain the PDU session establishment request message from the terminal device through Nsmf. For example, the terminal device sends an Nsmf_PDUSession_CreateSMContext Request (Nsmf_PDUSession_CreateSMContext Request) message to the SMF.

S702: The SMF selects a UPF based on elephant flow user information and/or elephant flow service information.

Specifically, after receiving the session establishment request message sent by the terminal device, the SMF may determine whether the terminal device is an elephant flow user, to be specific, determine whether the terminal device has a requirement for accessing a high-bandwidth service (for example, a first service), and then select a UPF that supports a transmission bandwidth of the high-bandwidth service. For example, the SMF may select the UPF in the manner of determining the target UPF in the foregoing steps S201 to S203, or may select a predefined UPF for processing the high-bandwidth service. For this step, refer to the description of step S601.

Optionally, the UPF may be of a PSA-UPF type.

S703: The SMF sends a second session establishment request message to a UPF.

For example, the second session establishment request message may be an N4 session establishment request message.

It should be understood that the UPF is the UPF selected by the SMF in step S702.

For example, if an N4 interface signaling processing concentrator is set in the UPF, the SMF may specifically send an N4 session establishment request message to the N4 interface signaling processing concentrator in the UPF. Optionally, the N4 session establishment request message may carry the elephant flow user information and/or the elephant flow service information.

S704: The UPF selects at least one processing unit based on the elephant flow user information and/or the elephant flow service information.

For this step, refer to the description of the foregoing step S602 and step S603.

Specifically, the N4 interface signaling processing concentrator in the UPF is at least one processing unit selected for a session. For example, FIG. 7 shows that the N4 interface signaling processing concentrator selects a processing unit 1 in the UPF.

S705: The N4 interface signaling processing concentrator in the UPF sends the second session establishment request message to the at least one processing unit. For example, the second session establishment request message may be an N4 session establishment request message.

The at least one processing unit is selected by the UPF for the session. For example, FIG. 7 shows that the N4 interface signaling processing concentrator in the UPF sends the second session establishment request message to the processing unit 1 in the UPF.

S706: The UPF sends a session establishment response message to the SMF.

For example, the session establishment response message may be an N4 session establishment response message. It may be understood that the session establishment response message is a response message of the second session establishment request message in step S705, and the response message may indicate that session establishment is completed. For example, FIG. 7 shows that the processing unit 1 in the UPF sends the session establishment response message to the SMF.

S707: The UPF determines that a processing unit is faulty or overloaded.

For example, the N4 interface signaling processing concentrator in the UPF determines that a processing unit is faulty or overloaded and has a congestion risk, and performs S708.

It should be understood that the processing unit is a processing unit other than the processing unit 1 and a processing unit 2.

S708: The N4 interface signaling processing concentrator in the UPF migrates services distributed on a processing unit to the processing unit 1 and the processing unit 2 in the UPF.

In addition, in step S707, the UPF may alternatively determine that the processing unit 1 is faulty or overloaded. In this case, in step S708, the UPF migrates services distributed on the processing unit 1 to the processing unit 2 in the UPF. A case that the processing unit 2 is faulty or overloaded is similar.

In the method shown in FIG. 7, the UPF obtains the elephant flow user information and/or the elephant flow service information from the SMF. The UPF selects, by taking the transmission bandwidth requirement for accessing the high-bandwidth service by the terminal device into consideration, the at least one processing unit to establish a session. This can implement load balancing between processing units in the UPF and avoid network congestion. In addition, resource utilization of the entire network can also be improved, and further operators' network deployment costs are reduced.

In addition, it should be noted that the method provided in FIG. 7 may be applied to the network architecture shown in FIG. 1, or may be applied to another core network architecture in which the NWDAF is not deployed. This is not limited in embodiments of this application.

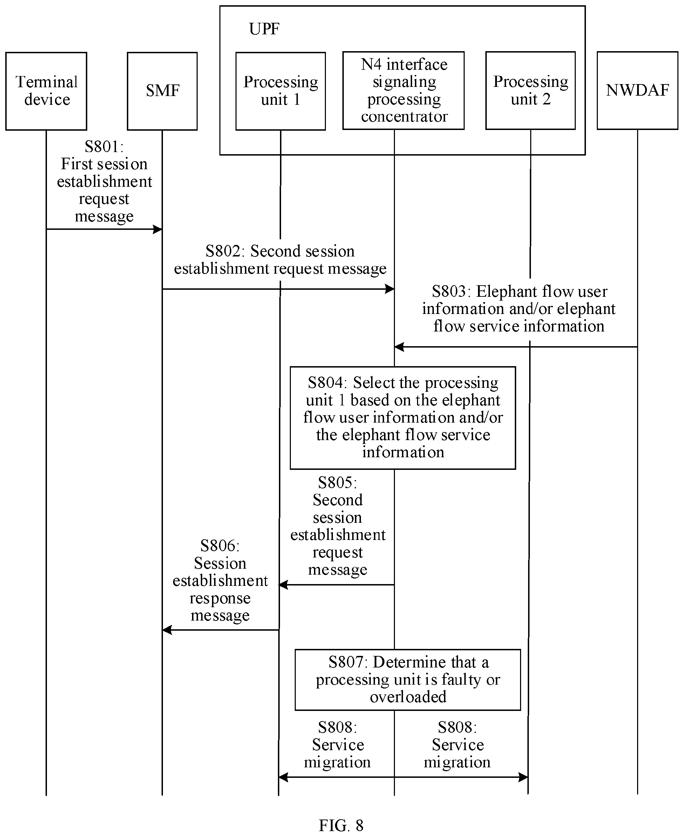

With reference to the method in FIG. 6, FIG. 8 shows a service processing method. An NWDAF in FIG. 8 may be the network data analytics function network element in the method in FIG. 6, an SMF is the session management function network element in the method in FIG. 6, and a UPF is the user plane function network element in the method in FIG. 6. The method may include the following steps.

S801: A terminal device sends a first session establishment request message to an SMF.

For example, the terminal device initiates a session establishment procedure to the SMF. In other words, the terminal device sends the first session establishment request message to the SMF.

In this embodiment, an example in which the terminal device requests to establish a PDU session is used. The SMF may specifically obtain the PDU session establishment request message from the terminal device through Nsmf. For example, the terminal device sends an Nsmf_PDUSession_CreateSMContext Request (Nsmf_PDUSession_CreateSMContext Request) message to the SMF.

S802: The SMF sends a second session establishment request message to a UPF.

For example, the second session establishment request message may be an N4 session establishment request message. For example, if an N4 interface signaling processing concentrator is set in the UPF, the SMF may specifically send the N4 session establishment request message to the N4 interface signaling processing concentrator in the UPF, where the N4 session establishment request message is for requesting to establish a session for the terminal device.

S803: The UPF obtains elephant flow user information and/or elephant flow service information from an NWDAF.

For example, the N4 interface signaling processing concentrator in the UPF obtains the elephant flow user information and/or the elephant flow service information from the NWDAF.

Specifically, an Nnf interface signaling processing concentrator may be set in the UPF, and the N4 interface signaling processing concentrator may obtain the elephant flow user information and/or the elephant flow service information from the NWDAF through the Nnf interface signaling processing concentrator. For example, the Nnf interface signaling processing concentrator in the UPF obtains, through subscription or querying, the elephant flow user information and/or the elephant flow service information from the NWDAF, and distributes the elephant flow user information and/or the elephant flow service information to the N4 interface signaling processing concentrator.

S804: The UPF selects a processing unit 1 based on the elephant flow user information and/or the elephant flow service information.

It should be understood that selecting the processing unit 1 is merely an example, and the processing unit 2 may alternatively be selected.

For example, the N4 interface signaling processing concentrator in the UPF may determine, based on the elephant flow user information and/or the elephant flow service information, whether the terminal device is an elephant flow user, to be specific, determine whether the terminal device has a requirement for accessing a high-bandwidth service (namely, a first service). In this way, a processing unit is selected, by considering load sharing corresponding to the elephant flow user information and/or the elephant flow service information, to establish a session. For example, the processing unit 1 has lower load and capable of processing the high-bandwidth service. For this step, refer to the description of the foregoing step S602 and step S603. For example, the N4 interface signaling processing concentrator in the UPF shown in FIG. 8 selects the processing unit 1 for the session.

S805: The N4 interface signaling processing concentrator in the UPF sends a second session establishment request message to the processing unit 1.

For example, the second session establishment request message may be an N4 session establishment request message.

The processing unit 1 is selected by the UPF for the session. For example, FIG. 8 shows that the N4 interface signaling processing concentrator in the UPF sends the second session establishment request message to the processing unit 1 in the UPF.

S806: The UPF sends a session establishment response message to the SMF.

For example, the session establishment response message may be an N4 session establishment response message. It may be understood that the session establishment response message is a response message of the second session establishment request message in step S805, and the response message may indicate that session establishment is completed. For example, FIG. 8 shows that the processing unit 1 in the UPF sends the session establishment response message to the SMF.

S807: The UPF determines that a processing unit is faulty or overloaded.

For example, the N4 interface signaling processing concentrator in the UPF determines that a processing unit is faulty or overloaded, to be specific, determines that a network has a congestion risk, and performs S808.

S808: The N4 interface signaling processing concentrator in the UPF migrates services distributed on the faulty or overloaded processing unit to the processing unit 1 and the processing unit 2 in the UPF.

For step S807 and step S808, refer to the description of step S707 and step S708 in FIG. 7. Details are not described herein.

In the solution shown in FIG. 8, the UPF obtains the elephant flow user information and/or the elephant flow service information from the NWDAF. The UPF selects, by taking the transmission bandwidth requirement for accessing the high-bandwidth service by the terminal device into consideration, the at least one processing unit to establish a session. This can implement load balancing between processing units in the UPF and avoid network congestion. In addition, resource utilization of the entire network can also be improved, and further operators' network deployment costs are reduced.

The foregoing describes the method provided in the present disclosure from the perspective of the session management function network element, the terminal device, the user plane function network element, the policy control function network element (or the unified data management function network element), the network data analytics function network element, and the perspective of interaction between the session management function network element, the terminal device, the user plane function network element, the policy control function network element (or the unified data management function network element), and the network data analytics function network element. To implement the functions in the foregoing method, the session management function network element, the terminal device, the user plane function network element, the policy control function network element, the unified data management function network element, and the network data analytics function network element may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

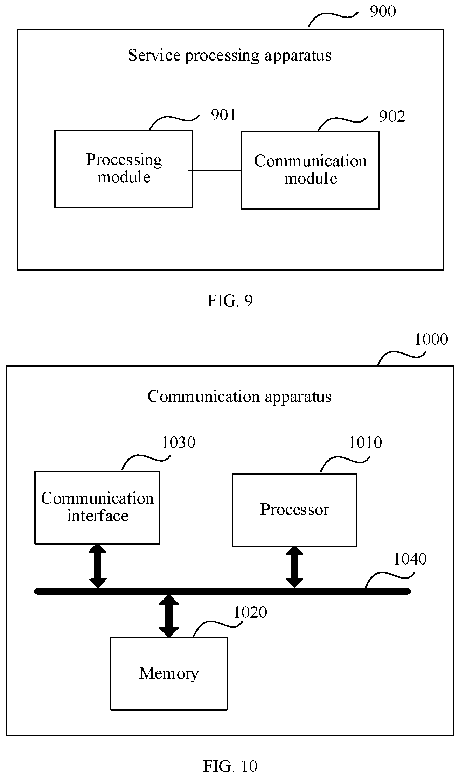

Based on a same concept, referring to FIG. 9, an embodiment of this application provides a service processing apparatus 900. The service processing apparatus 900 includes a processing module 901 and a communication module 902. The service processing apparatus 900 may be a session management function network element, or may be a service processing apparatus that is used in a session management function network element or used together with a session management function network element and that can implement a communication method performed by the session management function network element side. Alternatively, the service processing apparatus 900 may be a user plane function network element, or may be a service processing apparatus that is used in a user plane function network element or used together with a user plane function network element and that can implement a communication method performed by the user plane function network element side. Alternatively, the service processing apparatus 900 may be a network data analytics function network element, or may be a service processing apparatus that is used in a network data analytics function network element or used together with a network data analytics function network element and that can implement a communication method performed by the network data analytics function network element side. Alternatively, the service processing apparatus 900 may be a policy control function network element, or may be a service processing apparatus that is used in a policy control function network element or used together with a policy control function network element and that can implement a communication method performed by the policy control function network element side.

The communication module may also be referred to as a transceiver module, a transceiver, a transceiver apparatus, or the like. The processing module may also be referred to as a processor, a processing board, a processing unit, a processing apparatus, or the like. Optionally, a component that is in the communication module and that is configured to implement a receiving function may be considered as a receiving unit. It should be understood that the communication module is configured to perform a sending operation and a receiving operation on the session management function network element, the terminal device, the user plane function network element, the policy control function network element, or the network data analytics function network element side in the foregoing method embodiments. The component that is in the communication module and that is configured to implement a sending function is considered as a sending unit. In other words, the communication module includes the receiving unit and the sending unit. For example, when the service processing apparatus 900 is used in the session management function network element, a receiving unit included in the communication module 902 of the service processing apparatus 900 is configured to perform a receiving operation on the session management function network element side, and a sending unit included in the communication module 902 of the service processing apparatus 900 is configured to perform a sending operation on the session management function network element side. In addition, it should be noted that if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

The following describes in detail an implementation in which the service processing apparatus 900 is used in a session management function network element. The service processing apparatus 900 includes:
a communication module, configured to obtain first information, where the first information indicates a first service to be accessed by a terminal device, a transmission bandwidth of the first service exceeds a first threshold, and the first information is for determining the transmission bandwidth of the first service; and
a processing module, further configured to determine a target user plane function network element based on the transmission bandwidth of the first service.

The communication module is further configured to send a first message to the target user plane function network element, where the first message is for requesting the target user plane function network element to provide a service for the terminal device.

The following describes in detail an implementation in which the service processing apparatus 900 is used in a user plane function network element. The service processing apparatus 900 includes:
a communication module, configured to obtain information, where the information is for determining a transmission bandwidth of a first service to be accessed by a terminal device, the transmission bandwidth of the first service exceeds a first threshold, and the service processing apparatus supports the transmission bandwidth of the first service; and
a processing module, further configured to determine, based on the transmission bandwidth of the first service, at least one processing unit for processing the first service.

The following describes in detail an implementation in which the service processing apparatus 900 is used in a network data analytics function network element. The service processing apparatus 900 includes:
a communication module, configured to obtain historical service information of a terminal device from at least one user plane function network element; and
a processing module, configured to determine first information based on the historical service information of the terminal device, where the first information indicates a first service to be accessed by the terminal device, and a transmission bandwidth of the first service exceeds a first threshold.

The communication module is further configured to send the first information to a core network element, where the first information is for determining the transmission bandwidth of the first service.

The following describes in detail an implementation in which the service processing apparatus 900 is used in a policy control function network element. The service processing apparatus 900 includes:
a processing module, configured to determine first information, where the first information indicates a first service to be accessed by a terminal device, a transmission bandwidth of the first service exceeds a first threshold, and the first information is for determining the transmission bandwidth of the first service; and
a communication module, configured to send the first information to a session management function network element.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on a same technical concept, this application further provides a communication apparatus 1000. The communication apparatus 1000 may be a chip or a chip system. Optionally, in embodiments of this application, the chip system may include a chip, or may include a chip and another discrete device.

The communication apparatus 1000 may be configured to implement functions of network elements in the network architecture shown in FIG. 1. The communication apparatus 1000 may include at least one processor 1010. The processor 1010 is coupled to a memory. Optionally, the memory may be located in the apparatus, the memory may be integrated with the processor, or the memory may be located outside the apparatus. For example, the communication apparatus 1000 may further include at least one memory 1020. The memory 1020 stores a necessary computer program, configuration information, a computer program or instructions, and/or data for implementing any one of the foregoing embodiments. The processor 1010 may execute the computer program stored in the memory 1020, to complete the method in any one of the foregoing embodiments.

The communication apparatus 1000 may further include a communication interface 1030, and the communication apparatus 1000 may exchange information with another device through a communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may also be an input/output circuit, and may input information (or referred to as receive information) and output information (or referred to as send information). The processor is an integrated processor, a microprocessor, an integrated circuit, or a logic circuit. The processor may determine the output information based on the input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may perform a collaborative operation with the memory 1020 and the communication interface 1030. A specific connection medium between the processor 1010, the memory 1020, and the communication interface 1030 is not limited in embodiments of this application.

Optionally, referring to FIG. 10, the processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in embodiments of this application. The general-purpose processor may be a microprocessor or any conventional processor or the like. The steps of the method in embodiments of this application disclosed with reference to embodiments of this application may be directly performed by a hardware processor, or may be performed by using a combination of hardware in the processor and a software module.

In embodiments of this application, the memory may be a nonvolatile memory, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 1000 may be applied to a terminal device. Specifically, the communication apparatus 1000 may be the terminal device, or may be an apparatus that may support the terminal device and implement a function of the terminal device in any one of the foregoing embodiments. The memory 1020 stores a necessary computer program, a computer program, or instructions, and/or data for implementing a function of the terminal device in any one of the foregoing embodiments. The processor 1010 may execute the computer program stored in the memory 1020, to complete the method performed by the terminal device in any one of the foregoing embodiments. Applied to the terminal device, a communication interface in the communication apparatus 1000 may be configured to exchange signaling with a session management function network element.

Similarly, the communication apparatus 1000 may also be applied to a session management function network element, a user plane management function network element, a network data analytics function network element, a policy control function network element, and a unified data management function network element. Details are not described herein.

For technical effects achievable by the communication apparatus 1000 provided in this embodiment, refer to the foregoing method embodiments. Details are not described herein.

Based on the foregoing embodiments, embodiments of this application further provide a computer program. When the computer program runs on a computer, the computer is enabled to perform, from perspectives of a session management function network element, a terminal device, a user plane function network element, a policy control function network element, a unified data management function network element, or a network data analytics function network element, the method provided in the embodiments shown in FIG. 2 to FIG. 8.

Based on the foregoing embodiments, embodiments of this application further provide a computer-readable storage medium. The computer-readable storage medium stores a computer program. When the computer program is executed by a computer, the computer is enabled to perform, from perspectives of a session management function network element, a terminal device, a user plane function network element, a policy control function network element, a unified data management function network element, or a network data analytics function network element, the method provided in the embodiments shown in FIG. 2 to FIG. 8. The storage medium may be any usable medium accessible by a computer. For example, the computer-readable medium may include but is not limited to: a RAM, a read-only memory (read-only memory, ROM), an electrically erasable programmable read-only memory (electrically erasable programmable read only memory, EEPROM), a CD-ROM, or another magnetic storage device, or any other medium that can be used to carry or store expected program code in a form of an instruction or a data structure and that can be accessed by a computer.

Based on the foregoing embodiments, embodiments of this application provide a communication system, including at least two of the following network elements: a session management function network element, a user plane function network element, a policy control function network element, a unified data management function network element, and a network data analytics function network element. The communication system may further include a terminal device. The session management function network element, the terminal device, the user plane function network element, the policy control function network element, the unified data management function network element, and the network data analytics function network element may implement the method provided in the embodiments shown in FIG. 2 to FIG. 8.

Based on the foregoing embodiments, embodiments of this application further provide a chip. The chip is configured to read a computer program stored in a memory, and perform, from perspectives of a session management function network element, a terminal device, a user plane function network element, a policy control function network element, a unified data management function network element, or a network data analytics function network element, the method provided in the embodiments shown in FIG. 2 to FIG. 8.

Based on the foregoing embodiments, embodiments of this application provide a chip system. The chip system includes a processor, configured to support a computer apparatus in implementing functions related to the session management function network element, the terminal device, the user plane function network element, the policy control function network element, the unified data management function network element, or the network data analytics function network element in the embodiments shown in FIG. 2 to FIG. 8. In a possible design, the chip system further includes a memory. The memory is configured to store a program and data that are necessary for the computer apparatus. The chip system may include a chip, or may include a chip and another discrete component.

All or a part of the technical solutions provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, an access network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The available medium may be a magnetic medium (such as a floppy disk, a hard disk, or a magnetic tape), an optical medium (such as a digital video disc (DVD)), a semiconductor medium, or the like.

"A plurality of mentioned in embodiments of this application means two or more. The term "and/or" describes an association relationship for describing associated objects and represents that three relationships may exist. For example, A and/or B may represent the following three cases: Only A exists, both A and B exist, and only B exists. A character "/" generally indicates an "or" relationship between the associated objects. In addition, it should be understood that although terms such as first and second may be used in the present disclosure to describe objects, these objects should not be limited to these terms. These terms are merely used to distinguish the objects from each other.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any method or design scheme described as an "example" or "for example" in embodiments of this application should not be explained as being more preferred or having more advantages than another method or design scheme. Exactly, use of the word "example", "for example", or the like is intended to present a related concept in a specific manner.

In embodiments of this application, on the premise that there is no logical conflict, the embodiments may be mutually referenced. For example, methods and/or terms in method embodiments may be mutually referenced. For example, functions and/or terms in apparatus embodiments may be mutually referenced. For example, functions and/or terms in apparatus embodiments and method embodiments may be mutually referenced.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A service processing method, comprising:
obtaining, by a session management function network element, first information;
determining, by the session management function network element based on the first information, a transmission bandwidth of a first service to be accessed by a terminal device, wherein the transmission bandwidth of the first service exceeds a first threshold;
determining, by the session management function network element, a target user plane function network element based on the transmission bandwidth of the first service; and
sending, by the session management function network element, a first message to the target user plane function network element, wherein the first message is for requesting the target user plane function network element to provide a service for the terminal device.

2. The method according to claim 1, wherein the first information comprises at least one of the following: a service type of the first service, a service level of the first service, time period-based transmission traffic information of the first service, transmission rate information of the first service, or the transmission bandwidth of the first service.

3. The method according to claim 1 or 2, wherein the first information comprises running time information of the first service; and
the determining, by the session management function network element, a target user plane function network element based on the transmission bandwidth of the first service comprises:
determining, by the session management function network element, the target user plane function network element based on the transmission bandwidth of the first service and the running time information of the first service.

4. The method according to any one of claims 1 to 3, wherein the obtaining, by a session management function network element, first information comprises:
obtaining, by the session management function network element, the first information from a network data analytics function network element, wherein the first information is related to historical service information of the terminal device.

5. The method according to claim 4, wherein the obtaining, by the session management function network element, the first information from a network data analytics function network element comprises:
sending, by the session management function network element, a message to the network data analytics function network element, wherein the message comprises identification information of the terminal device and/or identification information for requesting the first information; and
receiving, by the session management function network element, the first information from the network data analytics function network element.

6. The method according to any one of claims 1 to 3, wherein the obtaining, by a session management function network element, first information comprises:
obtaining, by the session management function network element, subscription information of the terminal device from a first network element, wherein the subscription information comprises the first information.

7. The method according to claim 6, wherein the first network element comprises a policy control function network element or a unified data management network element.

8. The method according to any one of claims 1 to 7, wherein the first message comprises second information, and the second information is for determining the transmission bandwidth of the first service.

9. The method according to claim 8, wherein the second information comprises at least one of the following: a service type of the first service, a service level of the first service, time period-based transmission traffic information of the first service, transmission rate information of the first service, or the transmission bandwidth of the first service.

10. A service processing method, comprising:
obtaining, by a user plane function network element, information;
determining, by the user plane function network element based on the information, a transmission bandwidth of a first service to be accessed by a terminal device, wherein the transmission bandwidth of the first service exceeds a first threshold, and the user plane function network element supports the transmission bandwidth of the first service; and
determining, by the user plane function network element based on the transmission bandwidth of the first service, at least one processing unit for processing the first service.

11. The method according to claim 10, wherein the information comprises at least one of the following: a service type of the first service, a service level of the first service, time period-based transmission traffic information of the first service, transmission rate information of the first service, or the transmission bandwidth of the first service.

12. The method according to claim 10 or 11, wherein the obtaining, by a user plane function network element, information comprises:
receiving, by the user plane function network element, a first message from a session management function network element, wherein the first message comprises the information, and the first message is for requesting the user plane function network element to provide a service for the terminal device.

13. The method according to claim 10 or 11, wherein the obtaining, by a user plane function network element, information comprises:
obtaining, by the user plane function network element, the information from a network data analytics function network element, wherein the information is related to historical service information of the terminal device.

14. The method according to any one of claims 10 to 13, further comprising:
when a first processing unit is faulty or overloaded, migrating, by the user plane function network element, the first service processed by the first processing unit, wherein the first processing unit is one of the at least one processing unit.

15. A service processing method, comprising:
obtaining, by a network data analytics function network element, historical service information of a terminal device from at least one user plane function network element;
determining, by the network data analytics function network element, first information based on the historical service information of the terminal device; and
sending, by the network data analytics function network element, the first information to a core network element, wherein the first information is for determining a transmission bandwidth of a first service to be accessed by the terminal device, and the transmission bandwidth of the first service exceeds a first threshold.

16. The method according to claim 15, wherein the first information comprises at least one of the following: a service type of the first service, a service level of the first service, time period-based transmission traffic information of the first service, transmission rate information of the first service, or the transmission bandwidth of the first service.

17. The method according to claim 15 or 16, wherein the core network element comprises: a session management function network element, a policy control function network element, a unified data management network element, or a user plane function network element.

18. The method according to any one of claims 14 to 17, wherein before the sending, by the network data analytics function network element, the first information to a core network element, the method further comprises:
obtaining, by the network data analytics function network element, a message for requesting the first information, wherein the message is from the core network element, and the message comprises identification information of the terminal device and/or identification information for requesting the first information.

19. A service processing method, comprising:
determining, by a policy control function network element, first information; and
sending, by the policy control function network element, the first information to a session management function network element, wherein the first information is for determining a transmission bandwidth of a first service to be accessed by a terminal device, and the transmission bandwidth of the first service exceeds a first threshold.

20. The method according to claim 19, wherein the determining, by a policy control function network element, first information comprises:
determining, by the policy control function network element, the first information from subscription information of the terminal device that is stored in the policy control function network element.

21. The method according to claim 19, wherein the determining, by a policy control function network element, first information comprises:
obtaining, by the policy control function network element, the first information from a network data analytics function network element, wherein the first information is related to historical service information of the terminal device.

22. The method according to any one of claims 19 to 21, wherein the first information comprises at least one of the following: a service type of the first service, a service level of the first service, time period-based transmission traffic information of the first service, transmission rate information of the first service, or the transmission bandwidth of the first service.

23. The method according to claim 22, wherein the first information further comprises running time information of the first service.

24. A service processing apparatus, comprising:
a communication module, configured to obtain first information; and
a processing module, configured to determine, based on the first information, a transmission bandwidth of a first service to be accessed by a terminal device, wherein the transmission bandwidth of the first service exceeds a first threshold, wherein
the processing module is further configured to determine a target user plane function network element based on the transmission bandwidth of the first service; and
the communication module is further configured to send a first message to the target user plane function network element, wherein the first message is for requesting the target user plane function network element to provide a service for the terminal device.

25. The apparatus according to claim 24, wherein the first information comprises running time information of the first service, and
the processing module is specifically configured to:
determine the target user plane function network element based on the transmission bandwidth of the first service and the running time information of the first service.

26. The apparatus according to claim 24 or 25, wherein the communication module is specifically configured to:
obtain the first information from a network data analytics function network element, wherein the first information is related to historical service information of the terminal device.

27. The apparatus according to claim 26, wherein the communication module is specifically configured to:
send a message to the network data analytics function network element, wherein the message comprises identification information of the terminal device and/or identification information for requesting the first information; and
receive the first information from the network data analytics function network element.

28. The apparatus according to any one of claims 24 to 27, wherein the communication module is specifically configured to:
obtain subscription information of the terminal device from a first network element, wherein the subscription information comprises the first information.

29. The apparatus according to claim 28, wherein the first network element comprises a policy control function network element or a unified data management network element.

30. The apparatus according to any one of claims 24 to 29, wherein the first message comprises second information, and the second information is for determining the transmission bandwidth of the first service, wherein the second information comprises at least one of the following: a service type of the first service, a service level of the first service, time period-based transmission traffic information of the first service, transmission rate information of the first service, or the transmission bandwidth of the first service.

31. A service processing apparatus, comprising:
a communication module, configured to obtain information;
a processing module, configured to determine, based on the information, a transmission bandwidth of a first service to be accessed by a terminal device, wherein the transmission bandwidth of the first service exceeds a first threshold, and the user plane function network element supports the transmission bandwidth of the first service, wherein
the processing module is further configured to determine, based on the transmission bandwidth of the first service, at least one processing unit for processing the first service.

32. The apparatus according to claim 31, wherein the information comprises at least one of the following: a service type of the first service, a service level of the first service, time period-based transmission traffic information of the first service, transmission rate information of the first service, or the transmission bandwidth of the first service.

33. The apparatus according to claim 31 or 32, wherein the communication module is specifically configured to:
receive a first message from a session management function network element, wherein the first message comprises the information, and the first message is for requesting the user plane function network element to provide a service for the terminal device.

34. The apparatus according to claim 31 or 32, wherein the communication module is specifically configured to:
obtain the information from a network data analytics function network element, wherein the information is related to historical service information of the terminal device.

35. The apparatus according to any one of claims 31 to 34, wherein the processing module is further configured to:
when a first processing unit is faulty or overloaded, migrate the first service processed by the first processing unit, wherein the first processing unit is a processing unit managed by the user plane function network element.

36. A service processing apparatus, comprising:
a communication module, configured to obtain historical service information of a terminal device from at least one user plane function network element; and
a processing module, configured to determine first information based on the historical service information of the terminal device, wherein
the communication module is further configured to send the first information to a core network element, wherein the first information is for determining a transmission bandwidth of a first service to be accessed by the terminal device, and the transmission bandwidth of the first service exceeds a first threshold.

37. The apparatus according to claim 36, wherein the first information comprises at least one of the following: a service type of the first service, a service level of the first service, time period-based transmission traffic information of the first service, transmission rate information of the first service, or the transmission bandwidth of the first service.

38. The apparatus according to claim 36 or 37, wherein the core network element comprises: a session management function network element, a policy control function network element, a unified data management network element, or a user plane function network element.

39. The apparatus according to claim 36, wherein the communication module is further configured to: before sending the first information to a core network element, obtain a message for requesting the first information, wherein the message is from the core network element, and the message comprises identification information of the terminal device and/or identification information for requesting the first information.

40. A service processing apparatus, comprising:
a processing module, configured to determine first information; and
a communication module, configured to send the first information to a session management function network element, wherein the first information is for determining a transmission bandwidth of a first service to be accessed by a terminal device, and the transmission bandwidth of the first service exceeds a first threshold.

41. The apparatus according to claim 40, wherein the processing module is configured to determine the first information from subscription information of the terminal device that is stored in the service processing apparatus.

42. The apparatus according to claim 40, wherein the processing module is configured to obtain the first information from a network data analytics function network element by using the communication module, wherein the first information is related to historical service information of the terminal device.

43. The apparatus according to any one of claims 40 to 42, wherein the first information comprises at least one of the following: a service type of the first service, a service level of the first service, time period-based transmission traffic information of the first service, transmission rate information of the first service, or the transmission bandwidth of the first service.

44. The apparatus according to claim 43, wherein the first information further comprises running time information of the first service.

45. A communication apparatus, comprising:
a processor, wherein the processor is coupled to a memory, and the processor is configured to invoke computer program instructions stored in the memory, to perform the method according to any one of claims 1 to 9, the method according to any one of claims 10 to 14, the method according to any one of claims 15 to 18, or the method according to any one of claims 19 to 23.

46. A communication apparatus, configured to perform the method according to any one of claims 1 to 9, the method according to any one of claims 10 to 14, the method according to any one of claims 15 to 18, or the method according to any one of claims 19 to 23.

47. A communication system, comprising the apparatus according to any one of claims 24 to 30, the apparatus according to any one of claims 31 to 35, the apparatus according to any one of claims 36 to 39, and the apparatus according to any one of claims 40 to 44.

48. A computer-readable storage medium, wherein the computer-readable storage medium stores instructions; and when the instructions run on a computer, the computer performs the method according to any one of claims 1 to 9, the method according to any one of claims 10 to 14, the method according to any one of claims 15 to 18, or the method according to any one of claims 19 to 23.

49. A computer program product, comprising instructions, wherein when the instructions run on a computer, the computer is enabled to perform the method according to any one of claims 1 to 9, the method according to any one of claims 10 to 14, the method according to any one of claims 15 to 18, or the method according to any one of claims 19 to 23.

50. A chip, wherein the chip is configured to read a computer program stored in a memory, and perform the method according to any one of claims 1 to 9, the method according to any one of claims 10 to 14, the method according to any one of claims 15 to 18, or the method according to any one of claims 19 to 23.

51. A chip system, comprising:
a processor, configured to support a computer apparatus in performing the method according to any one of claims 1 to 9, the method according to any one of claims 10 to 14, the method according to any one of claims 15 to 18, or the method according to any one of claims 19 to 23; and
a memory, wherein the memory is configured to store a program and data of the computer apparatus.
